(19)

Europäisches
Patentamt
European
Patent Office
Office européen
des brevets

(11) **EP 4 734 451 A1**

(12) **EUROPEAN PATENT APPLICATION**

(43) Date of publication:
**29.04.2026 Bulletin 2026/18**

(21) Application number: **25211604.1**

(22) Date of filing: **28.10.2025**

(51) International Patent Classification (IPC):
*H04L 9/40* (2022.01)          *H04L 9/08* (2006.01)
*H04Q 11/00* (2006.01)         *H04L 9/32* (2006.01)

(52) Cooperative Patent Classification (CPC):
**H04L 63/123; H04L 9/0891; H04L 9/3242;
H04L 63/061; H04Q 11/0067**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **28.10.2024 CN 202411519160**

(71) Applicant: **Nokia Solutions and Networks Oy
02610 Espoo (FI)**

(72) Inventors:
• **GENG, Dan
  Shanghai 200120 (CN)**
• **VAN HOOF, Werner
  2630 Aartselaar (BE)**
• **LU, Hai Jun
  Shanghai 200120 (CN)**

(74) Representative: **DREISS Patentanwälte PartG
mbB
Friedrichstraße 6
70174 Stuttgart (DE)**

(54) **METHOD, DEVICE, APPARATUS AND MEDIUM FOR PASSIVE OPTICAL NETWORK ACTIVATION**

(57) Example embodiments of the present disclosure relate to methods, devices, apparatuses, and media for passive optical network activation. According to example embodiments of the present disclosure, a first apparatus receives, from a second apparatus, a key control message during a process of a key exchange. The key control message indicates the first apparatus to: generate a key by applying a cipher algorithm to be used and transmit the key, or confirm a key corresponding to a currently used cipher algorithm. The key control message further indicates the first apparatus to generate a key report based on the key control message, and transmit the key report to the second apparatus. In this way, the key and the cipher algorithm in the communication process of the first apparatuses and the second apparatuses can be matched, and the channel working stability is improved.

800

810 IN ACCORDANCE WITH A DETERMINATION THAT A CIPHER ALGORITHM CHANGE OCCURS IN THE FIRST APPARATUS AND A SECOND APPARATUS IN COMMUNICATION WITH THE FIRST APPARATUS IN PON

YES

820 REGENERATE, AT LEAST ONE FIRST INTEGRITY KEY (IK) BASED ON A NEW CIPHER ALGORITHM TO BE USED

820 START USING THE AT LEAST ONE FIRST IK IMMEDIATELY; OR START USING THE AT LEAST ONE FIRST IK AFTER A CONDITION IS MET, THE CONDITION COMPRISING AT LEAST ONE OF THE FOLLOWING: COMPLETING, USING A TARGET IK, A SPECIFIC MESSAGE EXCHANGE BETWEEN THE FIRST APPARATUS AND THE SECOND APPARATUS; OR RECEIVING A SPECIFIC DOWNLINK FRAME BY THE FIRST APPARATUS

FIG. 8

EP 4 734 451 A1

## Description

### FIELD

Example embodiments of the present disclosure relate to the field of communications technologies, and in particular, to methods, devices, apparatuses, and computer-readable media for passive optical network activation.

### BACKGROUND

With the rapid development of modern communication technologies, the construction and optimization of network infrastructure becomes an important factor in promoting social development of information. Optical fiber communication, as a high-bandwidth and low-loss transmission medium, has been widely used and popularized. In many optical fiber communication technologies, passive optical network (PON) has become the main option of broadband access networks such as Fiber to Home (FTTH) due to its efficient and economical characteristics.

The architecture design of a passive optical network is intended to reduce the number of active devices in a network, distribute signals to multiple users through a fiber distribution network, and reduce construction and maintenance costs. With the continuous advancement of technology, new passive optical network technologies and activation methods have been proposed, which not only improve the performance and stability of the network, but also provide more possibilities for future network development. Therefore, it is important to research and optimize the activation process of the passive optical network and to improve the overall network performance.

### SUMMARY

In a first aspect of the present disclosure, a first apparatus for a passive optical network activation is provided. The first apparatus includes: at least one processor; and at least one memory storing instructions that, when executed by the at least one processor, cause the first apparatus at least to: receive, from a second apparatus, a key control message during a process of a key exchange, the key control message indicating the first apparatus to: generate a key by applying a cipher algorithm to be used and transmit the key; or confirm a key corresponding to a currently used cipher algorithm; generate a key report based on the key control message; and transmit the key report to the second apparatus.

In a second aspect of the present disclosure, a second apparatus for a passive optical network activation is provided. The second apparatus includes: at least one processor; and at least one memory storing instructions that, when executed by the at least one processor, cause the second apparatus at least to: transmit, to a first apparatus, a key control message during a process of a key exchange, the key control message indicating the first apparatus to: generate a key by applying a cipher algorithm to be used and transmit the key; or confirm a key corresponding to a currently used cipher algorithm; and receive, from the first apparatus, a key report that is generated by the first apparatus based on the key control message.

In a third aspect of the present disclosure, a communication system is provided. The communication system includes a first apparatus according to a first aspect of the present disclosure, or a second apparatus according to the second aspect.

In a fourth aspect of the present disclosure, a communication method is provided. The communication method includes: receiving, from a second apparatus, a key control message during a process of a key exchange, the key control message indicating a first apparatus to: generate a key by applying a cipher algorithm to be used and transmit the key; or confirm a key corresponding to a currently used cipher algorithm; generating a key report based on the key control message; and transmitting the key report to the second apparatus.

In a fifth aspect of the present disclosure, a communication method is provided. The communication method includes: transmitting, to a first apparatus, a key control message during a process of a key exchange, the key control message indicating the first apparatus to: generate a key by applying a cipher algorithm to be used and transmit the key; or confirm a key corresponding to a currently used cipher algorithm; and receiving, from the first apparatus, a key report that is generated by the first apparatus based on the key control message.

In a sixth aspect of the present disclosure, an apparatus for communication is provided. The apparatus includes means for receiving, from a second apparatus, a key control message during a process of a key exchange, the key control message indicating a first apparatus to: generate a key by applying a cipher algorithm to be used and transmit the key; or confirm a key corresponding to a currently used cipher algorithm; generating a key report based on the key control message; and transmitting the key report to the second apparatus.

In a seventh aspect of the present disclosure, an apparatus for communication is provided. The apparatus includes means for transmitting, to a first apparatus, a key control message during a process of a key exchange, the key control message indicating the first apparatus to: generate a key by applying a cipher algorithm to be used and transmit the key; or confirm a key corresponding to a currently used cipher algorithm; and receiving, from the first apparatus, a key report that is generated by the first apparatus based on the key control message.

In an eighth aspect of the present disclosure, a first apparatus for a passive optical network (PON) is provided. The first apparatus includes: at least one processor; and at least one memory storing instructions that, when executed by the at least one processor, cause the first apparatus at least to: in accordance with a determination that a cipher algorithm change occurs in the first apparatus and a second apparatus in communication with the first apparatus in PON, regenerate, at least one first integrity key (IK) based on a new cipher algorithm to be used; start using the at least one first IK immediately; or start using the at least one first IK after a condition is met, the condition including at least one of the following: completing, using a target IK, a specific message exchange between the first apparatus and the second apparatus; or receiving a specific downlink frame by the first apparatus.

In a ninth aspect of the present disclosure, a second apparatus for a passive optical network (PON) is provided. The second apparatus includes: at least one processor; and at least one memory storing instructions that, when executed by the at least one processor, cause the second apparatus at least to: in accordance with a determination that a cipher algorithm change occurs in the second apparatus and a first apparatus in communication with the second apparatus in PON, regenerate at least one second integrity key (IK) based on a new cipher algorithm to be used; start using the at least one second IK immediately; or start using the at least one second IK after a condition is met, the condition including at least one of the following: completing, using a target IK, a specific message exchange between the first apparatus and the second apparatus; or transmitting a specific downlink frame by the second apparatus.

According to a tenth aspect of the present disclosure, a communication method is provided. The communication method includes: in accordance with a determination that a cipher algorithm change occurs in a first apparatus and a second apparatus in communication with the first apparatus in PON, regenerating at least one first integrity key (IK) based on a new cipher algorithm to be used; starting using the at least one first IK immediately; or starting using the at least one first IK after a condition is met, the condition including at least one of the following: completing, using a target IK, a specific message exchange between the first apparatus and the second apparatus; or receiving a specific downlink frame by the first apparatus.

According to an eleventh aspect of the present disclosure, a communication method is provided. The communication method includes: in accordance with a determination that a cipher algorithm change occurs in a second apparatus and a first apparatus in communication with the second apparatus in PON, regenerating at least one second integrity key (IK) based on a new cipher algorithm to be used; starting using the at least one second IK immediately; or starting using the at least one second IK after a condition is met, the condition including at least one of the following: completing, using a target IK, a specific message exchange between the first apparatus and the second apparatus; or transmitting a specific downlink frame by the second apparatus.

In a twelfth aspect of the present disclosure, an apparatus for communication is provided. The apparatus includes means for in accordance with a determination that a cipher algorithm change occurs in a first apparatus and a second apparatus in communication with the first apparatus in PON, regenerating at least one first integrity key (IK) based on a new cipher algorithm to be used; means for starting using the at least one first IK immediately; or means for starting using the at least one first IK after a condition is met, the condition including at least one of the following: completing, using a target IK, a specific message exchange between the first apparatus and the second apparatus; or receiving a specific downlink frame by the first apparatus.

In a thirteenth aspect of the present disclosure, an apparatus for communication is provided. The apparatus includes: means for in accordance with a determination that a cipher algorithm change occurs in a second apparatus and a first apparatus in communication with the second apparatus in PON, regenerating at least one second integrity key (IK) based on a new cipher algorithm to be used; means for starting using the at least one second IK immediately; or means for starting using the at least one second IK after a condition is met, the condition including at least one of the following: means for starting using the at least one second IK after a condition is met, the condition including at least one of the following; or transmitting, by the second apparatus, a particular downlink frame.

In a fourteenth aspect of the present disclosure, a computer-readable medium is provided. The computer-readable medium stores an instruction. The instruction, when executed by at least one processing unit, causes the at least one processing unit to perform the method according to the fourth aspect, the fifth aspect, the tenth aspect, or the eleventh aspect.

It should be understood that the content described in the summary section is not intended to limit the key or important features of the embodiments of the present disclosure, nor is it intended to limit the scope of the present disclosure. Other features of the present disclosure will become readily understood from the following description.

## BRIEF DESCRIPTION OF DRAWINGS

Example embodiments of the present disclosure are presented by way of example, and their advantages are explained in greater detail below with reference to the accompanying drawings, in which:

FIGS. 1A to 1C illustrate some example communication processes in a passive optical network;

FIG. 2 illustrates a schematic diagram of an environment in which example embodiments described herein can be implemented;

FIG. 3 illustrates a signaling diagram of key exchange for a passive optical network according to some example embodiments of the present disclosure;

FIG. 4 illustrates a signaling diagram of key exchange for a passive optical network according to some example embodiments of the present disclosure;

FIG. 5A illustrates a signaling diagram of a message integrity check for a passive optical network according to some example embodiments of the present disclosure;

FIG. 5B illustrates an example process of generating MIC information according to some example embodiments of the present disclosure;

FIG. 6 illustrates a flowchart of a communication method for a passive optical network according to some example embodiments of the present disclosure;

FIG. 7 illustrates a flowchart of a communication method for a passive optical network according to some example embodiments of the present disclosure;

FIG. 8 illustrates a flowchart of a communication method for a passive optical network according to some example embodiments of the present disclosure;

FIG. 9 illustrates a flowchart of a communication method for a passive optical network according to some example embodiments of the present disclosure;

FIG. 10 illustrates a simplified block diagram of a device suitable for implementing example embodiments of the present disclosure; and

FIG. 11 illustrates a schematic diagram of a computer-readable medium according to some example embodiments of the present disclosure.

Throughout the accompanying drawings, the same or similar reference numerals refer to the same or similar elements.

## DETAILED DESCRIPTION

Principles and spirit of the present disclosure will be described below with reference to several example embodiments shown in the accompanying drawings. It should be understood that these specific example embodiments are described merely to enable those skilled in the art to better understand and implement the present disclosure, and do not limit the scope of the present disclosure in any way.

As used herein, the term "including" and the like should be understood to be open-ended, i.e., "including but not limited to". The term "based on" should be understood as "based at least in part on". The terms "one embodiment" or "the embodiment" should be understood as "at least one embodiment". The terms "first," "second," and the like may refer to different or same objects. Other explicit and implicit definitions may also be included below.

As used herein, the term "determining" encompasses a wide variety of actions. For example, "determining" may include computing, calculating, processing, deriving, investigating, looking up (e.g., looking up in a table, database, or another data structure), ascertaining, etc. Further, "determining" may include receiving (e.g., receiving information), accessing (e.g., accessing data in memory), and/or the like. Further, "determining" may include parsing, selecting, choosing, establishing, etc.

Herein, unless explicitly stated, performing a step "in response to A" does not imply that this step is performed immediately after "A", and one or more intervening steps may be included.

As used herein, the term "circuitry/circuit" refers to one or more of: (a) hardware-only circuit implementations ( such as implementations in only analog and/or digital circuitry); and (b) combinations of hardware circuits and software, such as (if applicable): (i) a combination of analog and/or digital hardware circuit(s) and software/firmware, and (ii) any portions of hardware processor(s) with software (including digital signal processors(s), software, and memory(ies) that work together to cause an apparatus, such as optical communication apparatus or other computing devices, to perform various functions); and (c) hardware circuit(s) and/or processor(s), such as microprocessor(s) or a portion of a microprocessor(s), that requires software (e.g., firmware) for operation, but the software may not be present when it is not needed for operation.

The definition of circuitry/circuits applies to all usage scenarios of this term in this application, including any claims. As a further example, the term "circuitry/"circuit" as used herein also covers an implementation of merely a hardware circuit or processor (or multiple processors),or portion of a hardware circuit or processor, or its accompanying software or firmware. The term "circuitry" also covers, for example and if applicable to the particular claim element, a baseband integrated circuit or processor integrated circuit or similar integrated circuits in OLT or other computing device.

As used herein, the term "passive optical network (PON)" refers to an optical fiber communication network architecture that does not use any active electronic devices or power supplies during transmission, but distributes optical signals from an optical line terminal (OLT) to a plurality of optical network units (ONUs) through a passive optical distribution network (ODN). The passive optical network allocates optical signals by using optical splitters, so that multiple users share one optical fiber link, thereby realizing efficient and economical broadband access.

As used herein, the term "optical network unit (ONU)" refers to a device located at a user end in a passive optical network (PON) architecture. The optical network unit is responsible for converting the optical signal transmitted by the optical fiber into an electrical signal for use by the user terminal device, and the optical network unit is one of the key devices for enabling the user to access the optical fiber network. The optical network unit is typically connected to an optical line terminal (OLT) and communicates over an optical fiber distribution network (ODN). It should be understood that the optical network unit is not limited to home user access, but also may be applied to various application scenarios such as an enterprise and a campus. Given the rapid development in the field of communication, it is of course also possible that future types of communication devices may be used to implement the present disclosure. It should not be seen as limiting the scope of the present disclosure to only the aforementioned apparatuses.

As used herein, the term "optical line terminal (OLT)" refers to a device located at a service provider end in a passive optical network (PON) architecture. The optical line terminal is responsible for managing and controlling the entire PON network, including communication with an optical network unit (ONU). An optical line terminal converts an electrical signal from a core network into an optical signal, transmits the optical signal to a plurality of ONUs through an optical distribution network (ODN), and is also responsible for converting an optical signal transmitted by the ONU back into an electrical signal, and transmitting the electrical signal to the core network. It should be understood that the optical line terminal is not only used for signal conversion, but also performs various functions such as network management, bandwidth allocation, fault detection, and the like. Given the rapid development in the field of communication, it is of course also possible that future types of communication devices may be used to implement the present disclosure. It should not be seen as limiting the scope of the present disclosure to only the aforementioned apparatuses.

As used herein, the term "physical layer operation, administration, and maintenance (PLOAM)" refers to a set of protocols and functions for physical layer operations, administration, and maintenance in a passive optical network (PON) system. The PLOAM information is transmitted between the OLT and the ONU, and is responsible for managing various operations of the PON network, including bandwidth allocation, fault detection, performance monitoring, status reporting, and the like. Through the PLOAM channel, the OLT may transmit various administration and control commands to the ONU, and the ONU may also report its status and performance information to the OLT through the channel. It should be understood that PLOAM is not limited to only basic administration and maintenance functions, but may also include some expansion functions to meet requirements of different network environments.

In G.9804.2, five cipher algorithms are specified: AES 128, AES-256, Camellia-128, Camellia-256, and SM4-128. The use of other keys may be configured by OMCI. The key exchange is performed via a PLOAM message. After the cipher algorithm is changed, the key needs to be updated. Therefore, this requires timely communication between the OMCI and PLOAM modules in the OLT. Otherwise, it may cause the key and keys of the OLT and ONU mismatched in the following case.

The default key AES-128 may be used before the OMCI configuration is performed. The ONU reports its security capabilities to the OLT by the security capability attribute of the ONU2-G ME, and the OLT sets the current security mode of the ONU by the security mode attribute of the ONU2-G ME (specified by G.9889.1.2 ONU2-G). For example, the OLT may request the ONU to use AES-256, then the OLT and ONU switch to AES-256.

In G.988, a MIB reset action is defined, and its purpose is to clear the MIB, re-initialize it to its default, and reset the MIB data synchronization counter to 0. This means that the MIB reset action will make the ONU remove all the configuration from the OLT, and the ONU sets the security mode to 1, i.e., default AES-128. However, it is possible that the OLT doesn't switch to AES-128 timely, and still use its configured cipher algorithm, for example, SM4-128. When the periodic key exchange PLOAM is completed, the key and cipher algorithm mismatch occurs. Such a situation may occur especially in a vOMCI scenario, because the vOMCI module is not in the physical OLT, while other encryption functions are still implemented in the physical OLT, which will make the communication between the vOMCI module and other encryption functions not timely.

If the key exchange message and the MIB reset message are received simultaneously by the ONU, it is possible that the ONU and the OLT do not know whether the key exchange is for the old cipher algorithm or for the new cipher algorithm, so that the key and cipher algorithm mismatch occurs.

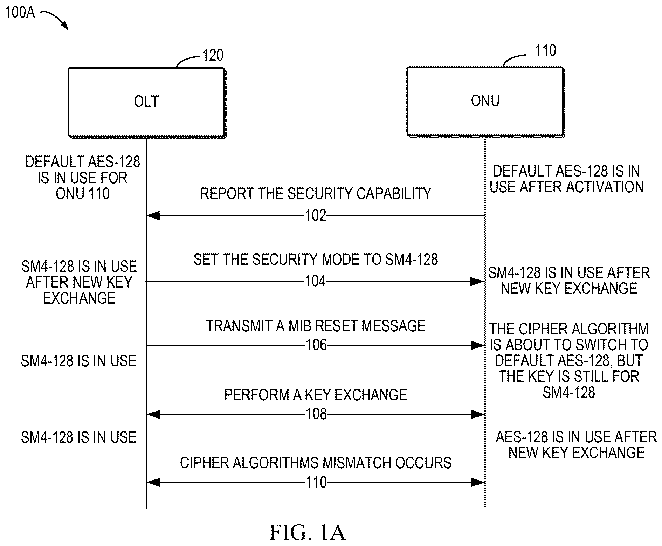

In other cases, the key and cipher algorithm mismatch may also occur. For example, when the cipher algorithm is being configured, the OLT or ONU experienced a power outage. It is possible that the key and cipher algorithm mismatch occurs, e.g., the OLT uses AES-256 and the ONU uses AES-128. This will cause that the OMCI channel does not work, for reconfiguration is also difficult, because reconfiguration dependents on the OMCI channel. Some situations in which the key and cipher algorithm mismatch may occur will be described below with reference to FIGS. 1A to 1C.

FIGS. 1A to 1C illustrate some example communication processes in a passive optical network. In a first communication process 100A shown in FIG. 1A, the optical network unit (ONU) 110 uses a default AES-128 after activation. In some example embodiments, the ONU 110 may report 102 its security capability to the OLT 120 to indicate that the default AES-128 is used for this ONU 110.

Further, the optical line terminal (OLT) 120 may set (104) the security mode of the ONU 110 to use SM4-128. After a new key exchange is performed, both ONU 110 and OLT 120 use SM4-128. In some example embodiments, the OLT 120 may transmit (106) an MIB reset message to the ONU 110, so that the ONU 110 removes all configurations from the OLT 120. Based on the MIB reset message, the ONU 110 may switch the cipher algorithm to default AES-128. However, at this time, the key of the ONU 110 is still for SM4-128. In addition, after the new key exchange is performed, the OLT 120 has been using SM4-128. In such a case, the ONU 110 and the OLT 120 perform (108) a key exchange, and the cipher algorithm mismatch occurs (110).

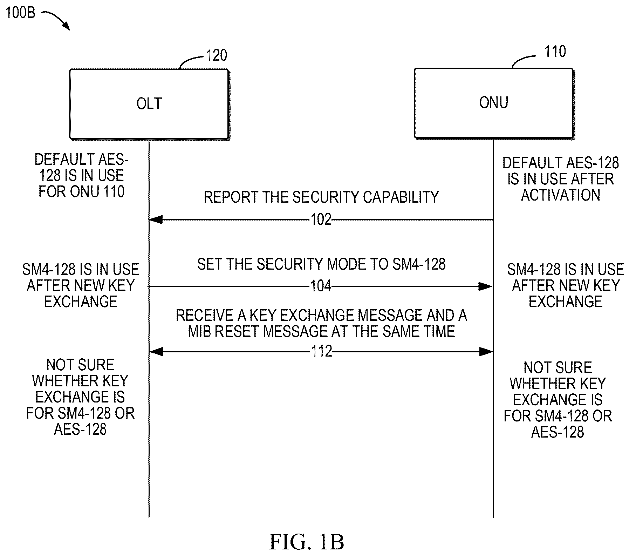

In a second communication process 100B shown in FIG. 1B, as in the first communication process 100A, a default AES-128 may also be used after activation at the ONU 110 end. The ONU 110 may also report (102) its security capability to the OLT 120 to indicate that the default AES-128 is for this ONU 110. At the OLT 120 end, the security mode of the ONU 110 may be set (104) to use SM4-128. After the new key exchange is performed, both ONU 110 and OLT 120 use SM4-128.

In some example embodiments, the ONU 110 may simultaneously receive (112) a key exchange message and the MIB reset message. In such a case, the ONU 110 and the OLT 120 will not determine whether the key exchange is for SM4-128 or AES-128.

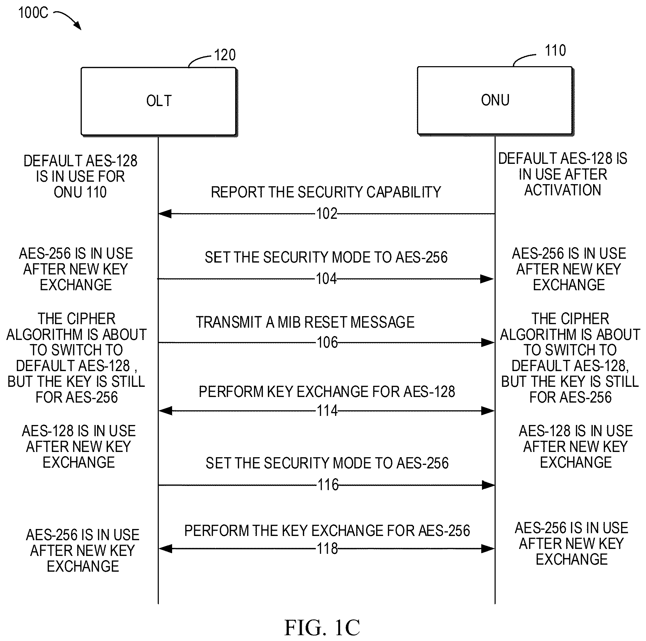

In a third communication process 100C shown in FIG. 1C, as in the first communication process 100A, the default AES-128 may also be used after activation at the ONU 110 end. The ONU 110 may also report (102) its security capability to the OLT 120 to indicate that the default AES-128 is for this ONU 110. At the OLT 120 end, the security mode of the ONU 110 may be set (104) to use SM4-128. After the new key exchange is performed, both ONU 110 and OLT 120 use SM4-128. The OLT 120 may transmit (106a) the MIB reset message to the ONU 110 to cause the ONU 110 to remove all configurations from the OLT 120.

In some example embodiments, based on the MIB reset message, the ONU 110 and the OLT 120 may simultaneously switch the cipher algorithm to default AES-128. However, at this time, the keys of the ONU 110 and OLT 120 are still for SM4-128. Further, the ONU 110 and the OLT 120 may perform (114) key exchange for AES-128. After the new key exchange is performed, both ONU 110 and OLT 120 use AES-128.

In some example embodiments, the OLT 120 may set (116) the security mode of the ONU 110 to use AES-256. In turn, the ONU 110 and the OLT 120 may perform (118) key exchange for AES-256. After the new key exchange is performed, both ONU 110 and OLT 120 use AES-256.

In the foregoing process, multiple handovers of a plurality of cipher algorithms are performed between the ONU 110 and the OLT 120 based on the MIB reset message. Such a handover requires the OMCI channel and the PLOAM channel to constantly exchange messages to configure the cipher algorithm and produce a new key. In this process, the cipher algorithm and the key between the ONU 110 and the OLT 120 may be caused to be inconsistent. To avoid such a problem, a PLOAM channel may be used to transmit the cipher algorithm.

The principles and example embodiments of the present disclosure will be described in detail below with further reference to the accompanying drawings.

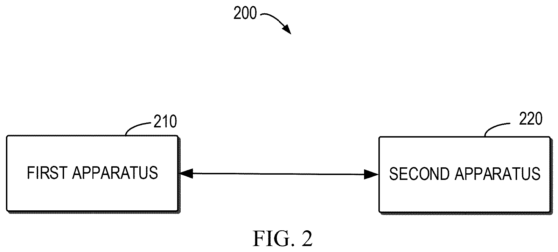

FIG. 2 illustrates a schematic diagram of an example communication environment 200 in which example embodiments described herein may be implemented. The communication environment 200 may be part of a communication network. In the communication environment 200, a first apparatus 210 and a second apparatus 220 are included. The communication environment 200 may include any number of first apparatuses 210 and second apparatuses 220. In an embodiment of the present disclosure, the first apparatus 210 and the second apparatus 220 are interchangeable, that is, the method/step implemented at the first apparatus 210 described in the embodiment may also be implemented at the second apparatus 220. It should be understood that communication environment 200 is merely illustrative and is not intended to limit the disclosure. In some example embodiments, the first apparatus may include an optical network unit (ONU) and the second apparatus may include an optical line terminal (OLT).

It should be understood that the communication environment 200 is described for illustrative purposes only without implying any limitation to the scope of the present disclosure. For example, example embodiments of the present disclosure may also be applied to systems different from the communication environment 200. The number of elements or entities shown is merely an example and not a limitation. Moreover, elements or entities may communicate using any communication technology currently known and developed in the future. As an example, in the passive optical network, an OLT is responsible for managing and controlling the entire passive optical network and distributing signals to multiple ONUs through an optical distribution network (ODN). Each ONU is responsible for converting the received optical signal into an electrical signal for use by the user terminal device. At this time, the communication environment 200 may include more than one ONU. A single OLT may be associated with one or more ONUs.

It should be understood that the number of apparatuses and their connections shown in FIG. 1 is merely illustrative and not limiting. The communication environment 200 may include any suitable number of apparatuses configured to implement example embodiments of the present disclosure. Although not shown, it should be understood that one or more other apparatuses may be deployed in the communication environment 200.

In some example embodiments, the first apparatus 210 may include an optical network unit (ONU) and the second apparatus 220 may include an optical line terminal (OLT). In the following, for the purpose of illustration, some example embodiments are described by using an example in which the first apparatus 210 is an optical network unit (ONU) and the second apparatus 220 is an optical line terminal (OLT). However, in some example embodiments, the operations described in connection with the first apparatus or ONU may also be implemented at the second apparatus or OLT. Similarly, operations described in connection with the second apparatus or OLT may also be implemented at the first apparatus or ONU.

Communication in the communication environment 200 may be implemented in accordance with any suitable communication protocol(s). Examples of communication protocols include, but are not limited to, cellular communication protocols such as first generation (1G), second generation (2G), 2.5G, 2.75G, third generation (3G), fourth generation (4G), 4.5G, fifth generation (5G), sixth generation (6G), wireless local area network communication protocols such as Institute of Electrical and Electronics Engineers (IEEE) 802.11, and/or any other protocols currently known or to be developed in the future.

Further, the communication may utilize any proper wireless communication technology, including but not limited to: Code Division Multiple Access (CDMA), Frequency Division Multiple Access (FDMA), Time Division Multiple Access (TDMA), Frequency Division Duplex (FDD), Time Division Duplex (TDD), Multiple Input Multiple Output (MIMO), Orthogonal Frequency Division Multiple (OFDM), Discrete Fourier Transform Spread Orthogonal Frequency Division Multiple (DFT-s-OFDM), and/or any other technologies currently known or to be developed in the future.

The principles and example embodiments of the present disclosure will be described in detail below with further reference to the accompanying drawings.

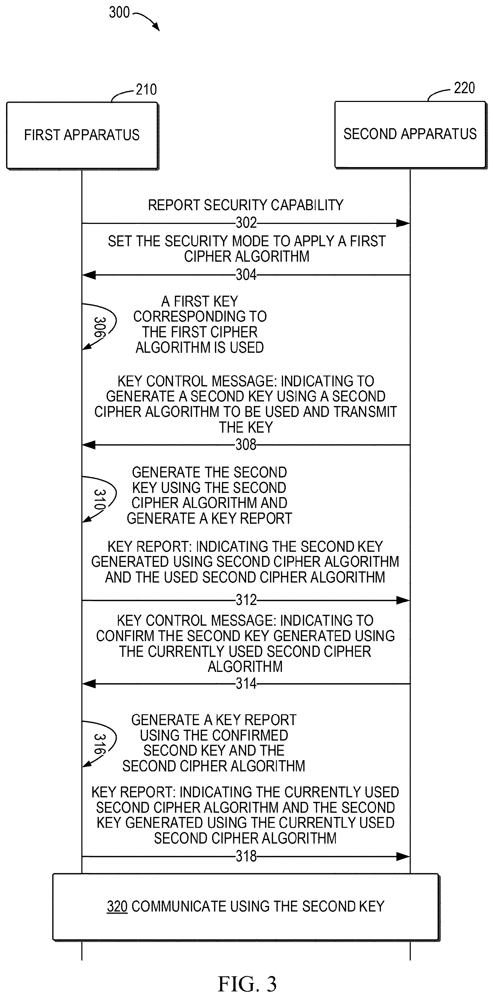

FIG. 3 illustrates a signaling diagram of a key exchange 300 for a passive optical network according to some example embodiments of the present disclosure. For purposes of discussion, the signaling diagram of the key exchange 300 for the passive optical network will be described with reference to FIG. 2 and FIG. 3. In some example embodiments, the first apparatus 210 may include an optical network unit (ONU) and the second apparatus 220 may include an optical line terminal (OLT). It should be understood that although only a single first apparatus 210 and a single second apparatus 220 are shown in FIG. 3, a plurality of first apparatuses 210 and second apparatuses 220 may also be involved in the signaling diagram 300.

As shown in FIG. 3, in some example embodiments, the first apparatus 210 may report (302) a security capability to the second apparatus 220 to indicate a default cipher algorithm used by the first apparatus 210. The default cipher algorithm may be AES -128, for example. In some example embodiments, the first apparatus 210 may report its security capability to the second apparatus 220 by the security capability attribute of the ONU2-G ME.

Further, the second apparatus 220 may set (304) the security mode to apply a first cipher algorithm. In some example embodiments, the second apparatus 220 may set a current security mode of the first apparatus 210 by the security mode attribute of the ONU2-G ME. For example, the first cipher algorithm that the second apparatus 220 requests the first apparatus 210 to use is AES -256. The first apparatus 210 and the second apparatus 220 then switch to AES -256. In turn, the first apparatus 210 uses (306) a first key corresponding to the first cipher algorithm.

During the process of the key exchange, the first apparatus 210 may receive (308) a key control message from the second apparatus 220. The key control message indicates generating a second key by using a second cipher algorithm to be used and transmitting the key. The second cipher algorithm is the same as or different from the first cipher algorithm. In some example embodiments, the key control message may be as shown in Table 1:

Table 1

| Octet | Content | Description |
|---|---|---|
| 1-2 | ONU Identification | A directed or broadcast message to instructs one or all of the tuned-in ONUs to generate new key material or confirm their existing keys. As a broadcast message, the ONU identification = 0x03FF. |
| 3 | Message Type Identification | 0x0D, "Key_Control". |
| 4 | Sequence Number | An eight-bit unicast or broadcast PLOAM sequence number. |
| 5 | Reserved bits | Set to 0x00 by the transmitter; treated as "don't care" by the receiver. |
| 6 | Control Flag | 0000 AAAC, where |

(continued)

| Octet | Content | Description |
|---|---|---|
| | | C = 0: Generate and transmit a new key. |
| | | C = 1: Confirm the existing key. |
| | | AAA Cipher Algorithm |
| | | AAA=000:AES-128 |
| | | AAA=001:AES-256 |
| | | AAA=010:Camellia-128 |
| | | AAA=011:Camellia-256 |
| | | AAA=000:SM4-128 |
| | | Other values are reserved. |
| | | When C = 0, the cipher algorithm for the new key is |
| | | When C = 1, the cipher algorithm for the existing key is |
| 7 | Key Index | 0000 00 BB, where<br>BB-Key Index<br>01: a first key of a key pair<br>10: a second key of a key pair |
| 8 | Key_Length | The required key length, number of bytes. |
| 9-24 | Random Number X | OLT generated random 128-bit number intended to be used as KeyControl_RandomX variable in 128-bit EK calculation (see clause 15.5.2). |
| 25-40 | Random Number Y | OLT generated random 128-bit number, where $X \neq Y$, intended to be used as KeyControl_RandomY variable in 256-bit EK calculation (see clause 15.5.2). |
| 41-48 | MIC | Message integrity check, computed using the default PLOAM_IK in case of broadcast message, and using the ONU- |
| | | specific derived shared PLOAM_IK in case of directed message. |

As shown in Table 1, the generation of the second key by using the second cipher algorithm to be used and the transmission of the key, as indicated by the key control message, may be indicated in a control flag field, where "AAA" in "0000 AAAC" may indicate the second cipher algorithm to be used, and "C" may indicate that a new key is generated and transmitted by using the second cipher algorithm to be used. In this case, "C" may be set to 0, for example.

In some example embodiments, the key control message may be received in a physical layer operations, administration, and maintenance (PLOAM) message.

Further, the first apparatus 210 may generate the second key by using the second cipher algorithm and generate (310) a key report. The key report indicates the generation of the second key by using the second cipher algorithm and the second cipher algorithm that is used. In turn, the first apparatus 210 may transmit (312) the key report to the second apparatus 220. In some example embodiments, the key report may be as shown in Table 2:

Table 2

| Octet | Content | Description |
|---|---|---|
| 1-2 | ONU Identification | The ONU identification of the message sender. |
| 3 | Message Type Identification | 0x05 "Key_Report". |
| 4 | Sequence Number | The value from the downlink key report message is repeated. If the length of the key material requires that a plurality of key report messages be transmitted upstream, the sequence numbers is the same in each of the messages. |
| 5 | Report Type | 0000 AAAR<br>R Report Type:<br>R = 0: Report on the new key. |

(continued)

| Octet | Content | Description |
|---|---|---|
| | | R = 1: Report on the existing key.<br>AAA Cipher Algorithm<br>    AAA=000:AES-128<br>    AAA=001:AES-256<br>    AAA=010:Camellia-128<br>    AAA=011:Camellia-256<br>    AAA=100:SM4-128<br>Other values are reserved.<br>When R = 0, it is the cipher algorithm for the new key.<br>When R = 1, it is the cipher algorithm for the existing key. |
| 6 | Key index | 0000 00 BB, where |
| | | BB-Key index<br>    01: First key of a key pair;<br>    10: Second key of a key pair. |
| 7 | Fragment Number | 0000 0FFF<br>FFF: three- bit fragment number, range 0-7. The first fragment is number 0. |
| 8 | Reserved bit | Set to 0x00 by the transmitter and treated as "don't care" by the receiver. |
| 9-40 | Key_Fragment | Key Fragment, 32 bytes.<br>Any padding that may be required is in the higher numbered bytes of the message.<br>For a report on the existing key, a single segment containing the key name will be sent.<br>Key Name = BC_CMAC (KEK, cipher key \|<br>0x33313431353932363533353839373933, 128).<br>For the new key, the KEK_encrypted key will be used.<br>KEK Encrypted Key = BC ECB (KEK, cipher key). |
| 41-48 | MIC | The message integrity check is computed using the ONU specific derived shared PLOAM integrity key. |

As shown in Table 2, the new second key generated by using the second cipher algorithm and the second cipher algorithm, as indicated by the key report, may be indicated in the report type field, where "AAA" in "0000 AAAR" may indicate the second cipher algorithm used to generate the new key, and "R" may confirm that the second key is a newly generated key by using the second cipher algorithm. In this case, "R" may be set to 0, for example.

It should be understood that the tables 1 and 2 are merely illustrative, and the scope of the present disclosure is not intended to be limiting.

In other example embodiments, the first apparatus 210 may receive (314) a further key control message from the second apparatus 220. The further key control message indicates to confirm the second key generated by using the currently used second cipher algorithm. Further, the first apparatus 210 may generate (316) the key report by using the confirmed second key and the second cipher algorithm. The key report indicates the currently used second cipher algorithm and the second key generated by using the currently used second cipher algorithm. In turn, the first apparatus 210 and the second apparatus 220 may start communicating (320) by using the second key.

In this case, the further key control message transmitted by the second apparatus 220 and the corresponding key report transmitted by the first apparatus 210 may still be indicated by examples as shown in Table 1 and Table 2.

For example, the confirmation of the second key generated by using the currently used second cipher algorithm, as indicated by the further key control message, may be indicated in the control flag field, where "AAA" in "0000 AAAC" may indicate the second cipher algorithm being used, and "C" may indicate to confirm the second key generated by the second cipher algorithm. In this case, "C" may be set to 1, for example.

For example, the currently used second cipher algorithm and the second key generated by using the currently used second cipher algorithm, as indicated by the key report, may be indicated in the report type field, where "AAA" in "0000 AAAR" may indicate the second cipher algorithm being used, and "R" may confirm that the second key is the key corresponding to the currently used second cipher algorithm. In this case, "R" may be set to 1, for example.

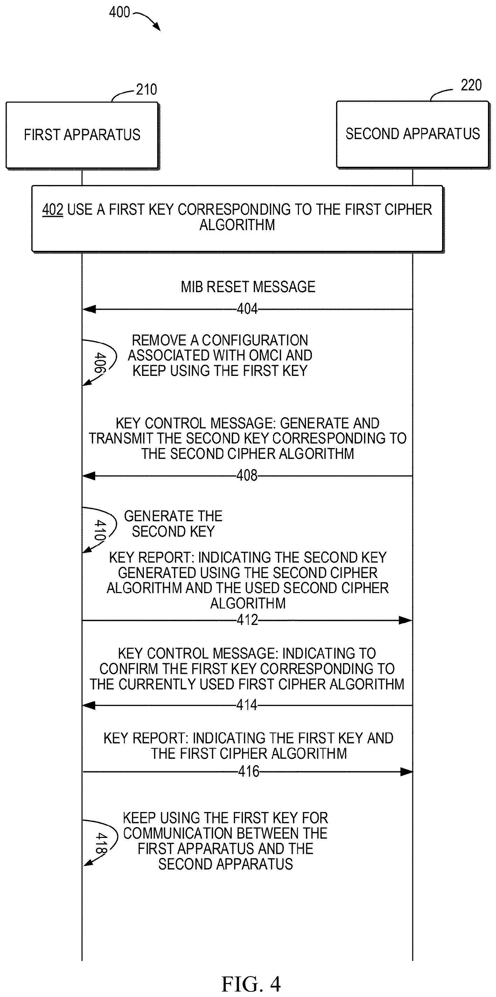

FIG. 4 illustrates a signaling diagram of a key exchange 400 for a passive optical network according to some example embodiments of the present disclosure. For purposes of discussion, the signaling diagram of the key exchange 400 of the passive optical network will be described with reference to FIG. 2 and FIG. 4. In some example embodiments, the first apparatus 210 may include an optical network unit (ONU) and the second apparatus 220 may include an optical line terminal (OLT). It should be understood that although only a single first apparatus 210 and a single second apparatus 220 are shown in FIG. 4, a plurality of first apparatuses 210 and second apparatuses 220 may also be involved in the signaling diagram 400.

As shown in FIG. 4, the first apparatus 210 and the second apparatus 220 may communicate (402) using a first key corresponding to the first cipher algorithm. In some example embodiments, the first cipher algorithm may be, for example, AES-256. The first apparatus 210 may receive (404) a MIB reset message from the second apparatus 220. In some example embodiments, the MIB reset message may be as shown in Table 3:

Table 3

| MT | Types | Purpose |
|---|---|---|
| 15 | MIB Reset | Clear the MIB, re-initialize it to a default value, and reset the MIB data sync counter to 0. |

In some example embodiments, if it is determined that the management information base, MIB, reset message is received, the first apparatus 210 may remove (406) a configuration associated with an optical network unit management and control interface, OMCI, while maintaining the use of the first key. In some example embodiments, the MIB reset message may be received through the control interface OMCI.

In some example embodiments, the first apparatus 210 may receive (408) the key control information from the second apparatus 220. The key control information may indicate generation and transmission of a second key corresponding to the second cipher algorithm. The second cipher algorithm is the same as or different from the first cipher algorithm. For example, the second cipher algorithm may still be AES -256. For another example, the second cipher algorithm may also be AES-128. In some other embodiments, the second cipher algorithm may also be a default cipher algorithm. In some example embodiments, the key control message may be received in a physical layer operations, administration, and maintenance (PLOAM) message.

Further, the first apparatus 210 may generate (410) the second key based on the key control information. In some example embodiments, the first apparatus 210 may transmit (418) the key report to the second apparatus. The key report indicates the second key generated by using the second cipher algorithm and the second cipher algorithm used to generate the second key.

In other embodiments, the first apparatus 210 may receive (414) the key control information from the second apparatus 220. The key control information may indicate to confirm the key corresponding to the currently used cipher algorithm. In some example embodiments, the first apparatus 210 may transmit (416) the key report to the second apparatus 220, the key report indicating the first key corresponding to the first cipher algorithm used at that time and the currently used first cipher algorithm. In turn, the first apparatus 210 may maintain (418) the use of the first key for communication between the first apparatus 210 and the second apparatus 220.

In the approach described above, the cipher algorithm and the corresponding key used by the first apparatus 210 and the second apparatus 220 may be indicated by using the key control message and the key report, so that the keys used by the first apparatus 210 and the second apparatus 220 match each other, thereby improving communication stability and reliability.

After the cipher algorithm changes, the first apparatus 210 and the second apparatus 220 need to update the key. In particular, the first apparatus 210 and the second apparatus 220 can regenerate the at least one integrity key (IK) based on the new cipher algorithm to be used. The first apparatus 210 and the second apparatus 220 need to respectively verify the updated IK of each other.

In G.9804.2, five cipher algorithms are specified: AES-128, AES-256, Camellia-128, Camellia-256, and SM4 (-128). Before performing the OMCI configuration, the first apparatus 210 and the second apparatus 220 may generate the PLOAM IK for PLOAM message integrity check and the OMCI IK for the OMCI message integrity check by using the default cipher algorithm AES-128.

Taking the first apparatus 210 including an optical network unit (ONU) and the second apparatus 220 including an optical line terminal (OLT) as an example, after the ONU is activated, its security capability may be reported to the OLT by the security capability attribute of the ONU2-G ME. The OLT may set the current security mode of the ONU by the security mode attribute of the ONU2-G ME.

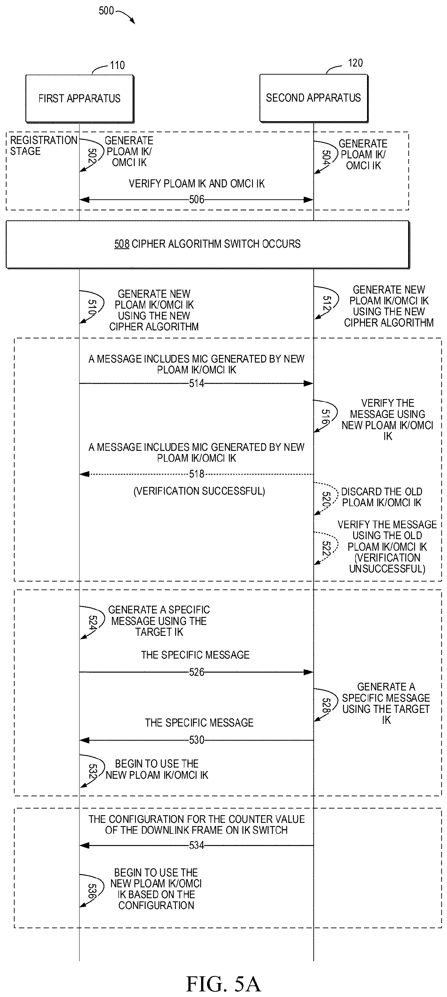

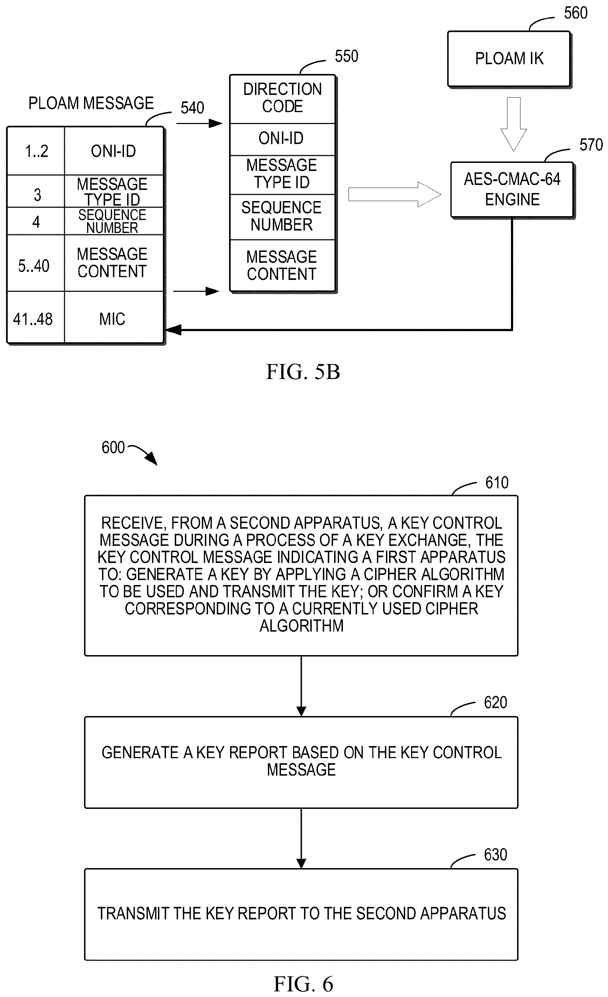

The process of message integrity check of the first apparatus 210 and the second apparatus 220 will be described below in conjunction with FIG. 5A and FIG. 5B.

FIG. 5A illustrates a signaling diagram of a message integrity check for a passive optical network according to some example embodiments of the present disclosure. For purposes of discussion, a signaling diagram of a message integrity check 500 for a passive optical network will be described with reference to FIG. 2 and FIG. 5A. In some example embodiments, the first apparatus 210 may include an optical network unit (ONU) and the second apparatus 220 may include an optical line terminal (OLT). It should be understood that although only a single first apparatus 210 and a single second apparatus 220 are shown in FIG. 5A, a plurality of first apparatuses 210 and second apparatuses 220 may also be involved in the signaling diagram 500.

When the first apparatus 210 joins the PON, the first apparatus 210 and the second apparatus 220 may use some PLOAM messages to activate the first apparatus 210. The PLOAM message structure may be as shown in Table 4:

Table 4

| Octet | Field | Content |
|-------|-------|---------|
| 1-2 | ONU Identification | 10 bits, aligned at the least significant bit (LSB) end of the 2 byte field. The six most significant bits are reserved, and should be set to 0 by the transmitter and ignored by the receiver. |
| 3 | Message Type Identification | This byte represents the message type. The enumerated code point for each message type is defined below. |
| 4 | Sequence number | Sequence number |
| 5-40 | Message Content | The message content is defined in the clause that describes each message type identification. |
| 41-48 | MIC | Message Integrity Check |

As shown in FIG. 5A, before a cipher algorithm switching occurs (508) in the first apparatus 210 and the second apparatus 220, the first apparatus 210 and the second apparatus 220 are in a registration stage. In this stage, the first apparatus 210 may generate (502) PLOAM IK and/or OMCI IK for message integrity check, and second apparatus 220 may also generate (504) PLOAM IK and/or OMCI IK for message integrity check. The first apparatus 210 and the second apparatus 220 may mutually verify (506) the PLOAM IK and OMCI IK of each other.

After the cipher algorithm switching occurs (508) in the first apparatus 210 and the second apparatus 220, the first apparatus 210 may generate (510) a new PLOAM IK and/or OMCI IK by using the new cipher algorithm, which may also generate (512) the new PLOAM IK and/or OMCI IK by using the new cipher algorithm.

In some example embodiments, the first apparatus 210 and the second apparatus 220 may immediately start to use the newly generated PLOAM IK and/or OMCI IK. In other example embodiments, the first apparatus 210 and the second apparatus 220 may start to use the newly generated PLOAM IK and/or OMCI IK after a condition is satisfied. The condition may include: completing a specific message exchange between the first apparatus 210 and the second apparatus 220 using a target IK or receiving a specific downlink frame by the first apparatus 210 from the second apparatus 220.

With continued reference to FIG. 5A, in some example embodiments, the first apparatus 210 may generate message integrity check (MIC) information based on the newly generated PLOAM IK and/or OMCI IK, and may transmit (514) a message including the MIC information to the second apparatus 220. For example, the message may include, for example, a specific message for querying the security mode OMCI message, or a PLOAM message for querying the registration identification.

FIG. 5B illustrates an example process of generating MIC information according to some example embodiments of the present disclosure. In some example embodiments, as shown in FIG. 5B, an MIC field of a PLOAM message 540 may be constructed using the cipher algorithm AES-128. The PLOAM message 540 may be delivered to an AES-CMAC-64 engine 570 by means of adding a direction code 550. The AES-CMAC-64 engine 570 may generate the MIC information based on the PLOAM message 540 and a PLOAM IK 560 and add the MIC information as a field to the PLOAM message 540.

In some example embodiments, for the downlink broadcast PLOAM message 540 and a unicast PLOAM message exchanged during activation of the first apparatus 210 prior to availability of the registration-based MSK, a default PLOAM_IK value, such as $(0x55)_{16}$, may be used, where the subscript 16 indicates the multiplicity of repetition of the specified hex pattern.

In some example embodiments, once the first apparatus 210 communicates its Registration_ID to the second apparatus 220, a basic MSK may be established according to equation (1):

$$MSK = AES\text{-}CMAC((0x55)_{16}, Registration\_ID, 128) \qquad (1)$$

All derivative shared keys may be obtained based on the following equations (2), (3) and (4):

$$SK = BC\text{-}ECMAC(MSK, (SN \mid PON\text{-}TAG \mid PON\text{-}TAG \mid SN), Tlen) \qquad (2)$$

$$OMCI\_IK = BC\text{-}ECMAC(SK, \text{"OMCIIntegrityKeyMakeOMCImoreSafe"}, Tlen) \qquad (3)$$

$$PLOAM\_IK = AES\text{-}CMAC(SK, 0x504c4f414d496e7465677274794b6579, 128) \qquad (4)$$

From the equations shown above, it is not difficult to see that SK and OMCI-IK are related to the cipher algorithm, while PLOAM-IK is typically computed using the cipher algorithm AES-128. After the foregoing process is completed, the first apparatus 210 and the second apparatus 220 start to use the PLOAM-IK Ranging_time PLOAM message, and the first apparatus 210 completes activation.

In some example embodiments, if it is determined that a message containing MIC information is received from the first apparatus 210, the second apparatus 220 may determine whether the MIC information can be verified using its newly generated PLOAM IK and/or OMCI IK. If it is determined that the MIC information can be verified by using its newly generated PLOAM IK and/or OMCI IK, the second apparatus 220 may verify (516) the message using its newly generated PLOAM IK and/or OMCI IK to generate a further message including a further MIC information and transmit (518) the further message to the first apparatus 210. In turn, the second apparatus 220 may discard (520) the old PLOAM IK and/or OMCI IK previously used.

In other example embodiments, if it is determined that the MIC information cannot be verified by using the newly generated PLOAM IK and/or OMCI IK, the second apparatus 220 may verify (522) the message using the old PLOAM IK and/or OMCI IK previously used by the second apparatus.

In some example embodiments, the first apparatus 210 may generate (524) a specific message with the target IK and transmit (526) the specific message to the second apparatus 220. Accordingly, the second apparatus 220 may also generate (528) the specific message by using the target IK and transmit (530) the specific message to the first apparatus 210.

In some example embodiments, the specific message may include a request to register a PLOAM message and the target IK may include a default IK, a previously used old PLOAM IK, or a newly generated PLOAM IK. In other example embodiments, the specific message may include a secure mode OMCI message and the target IK may include a default IK, a previously used old OMCI IK, or a newly generated OMCI IK.

Further, if it is determined that a response to a locked specific message is received from the second apparatus 220, the first apparatus 210 may start to use (532) its newly generated PLOAM IK and/or OMCI IK. Accordingly, if it is determined that a response to the locked specific message is received from the first apparatus 210, the second apparatus 220 may also start to use its newly generated PLOAM IK and/or OMCI IK.

With continued reference to FIG. 5A, in some example embodiments, the second apparatus 220 may transmit (534), to the first apparatus 210, a configuration of frame counter value indicating an IK switching via a get_set_capabilities PLOAM message, and start using the newly generated PLOAM IK and/or OMCI IK based on the frame counter value.

In some example embodiments, the first apparatus 210 may receive, from the second apparatus 220, the configuration of the frame counter value indicating the IK switching via the get_set_capabilities PLOAM message. If it is determined that a downlink frame corresponding to the frame counter value is received from the second apparatus 220, the first apparatus 210 may start to use the newly generated PLOAM IK and/or OMCI IK.

In some example embodiments, the structure of the get_set_capabilities PLOAM message may be as shown in Table 5:

Table 5

| Octet | Content | Description |
|---|---|---|
| 1-2 | ONU Identification | Directed Message to one ONU |
| 3 | Message Type Identification | 0x1F "Get_Set_Capabilities" |
| 4 | Sequence Number | Eight-bit unicast sequence number |
| 5 | Operation Code | An octet in the form of RRRR RRRS, where:<br><br>S = 0: Query<br>S = 1: Set |

(continued)

| Octet | Content | Description |
|---|---|---|
| | | R-reserved, set to 0 by the transmitter; treated as "don't care" by the receiver |
| 6 | Set Feature Identifier (SFI) | An octet indicating feature setting. 0x00: No feature being set; shall be used when S = 0.<br>0x01: Set US FEC Code.<br>Other values reserved by ITU-T. |
| If SFI = 0x00 | | |
| 7-40 | Padding | Set to 0x00 by the transmitter; treated as "don't care" by the receiver. |
| 41-48 | MIC | Message integrity check, computed using the ONU specific derived shared PLOAM_IK in case of directed messages. |
| If SFI = 0x01 | | |
| 7-8 | Predetermined SFC | The field contains a 16-bit integer representing the value of the 16 least significant bits of the future SFC. The method of using this field is as follows. If the identified Set feature is independent of direction or pertains to downlink transmission, the ONU shall implement the Set feature in the PHY frame designated by the SFC. |
| | | If the identified Set feature pertains to uplink transmission, the ONU shall implement the Set feature when responding to the PHY frame designated by the SFC.<br>If the identified Set feature is time invariant or not time critical, the field is set to 0x00 by the OLT and treated as "don't care" by the ONU.<br>Note: if the identified Set feature is timing-critical, it is recommended that the scheduled SFC value specifies a superframe that is transmitted at least 1 ms later with respect to the superframe when the Get_Set_Capabilities message is transmitted. |
| 9-10 | Setting feature parameters | Octet 9 is formatted as RRRR RRNN, and octet 10 is formatted as RRCC CCCC where:<br>NN - FEC code identifier.<br>NN=00 - FEC code 0 (default FEC code).<br>NN=01 - FEC code 1 (high throughput code) selected.<br>NN=10 - FEC code 2 (high margin code) selected.<br>The FEC code identifier indicates the FEC code that the ONU must use for upstream. Other values are reserved by ITU-T.<br>CCCCCC - Number of shortened columns.<br>If the FEC code identifier is 0x02 - FEC code 2 (high margin code) selected, then the octet contains the number of columns CS that are shortened, range $CS_{min}...CS_{max}$ where |
| | | $CS_{min}$ is 19 and $CS_{max}$ is 35. Other values are reserved by ITU-T.<br>R - reserved by ITU-T, set to 0 by the transmitter. |
| 11 | Set Cipher Algorithm | An octet in the form of RRR RAAA, where:<br><br>AAA- Cipher Algorithm Code Identifier.<br>AAA = 000: Reserved<br>AAA = 001: AES -128 Algorithm<br>AAA = 010: AES -256 Algorithm<br>AAA= 011: Camellia -128 Algorithm<br>AAA = 100: Camellia -256 Algorithm<br>AAA = 101: SM4 (-128) Algorithm<br>Other values are reserved by ITU-T.<br>R-reserved, set to 0 by the transmitter; treated as "don't care" by the receiver. |
| 12-40 | Reserved | Reserved and set as 0 by transmitter |

(continued)

| Octet | Content | Description |
|---|---|---|
| 41-48 | MIC | Message integrity check, computed using the ONU-specific derived shared PLOAM_IK in case of directed message. |

In some embodiments, the first apparatus 210 and the second apparatus 220 should use the new PLOAM-IK in the SFC specified PHY frame.

FIG. 6 shows a flowchart of a communication method 600 for a passive optical network according to some example embodiments of the present disclosure. The method 600 may be implemented, for example, in the communication environment 200, e.g., at the first apparatus 210.

At block 610, the first apparatus 210 receives, from a second apparatus 220, a key control message during the key exchange. The key control message indicating the first apparatus 210 to: generate a key by applying a cipher algorithm to be used and transmit the key; or confirm a key corresponding to a currently used cipher algorithm.

At block 620, the first apparatus 210 generates a key report based on the key control message.

At block 630, the first apparatus 210 transmits the key report to the second apparatus 220.

In some example embodiments, generating the key report includes: in accordance with a determination that the key control message indicates the first apparatus 210 to generate the key by applying the cipher algorithm to be used and transmit the key, the first apparatus 210 generates the key by the cipher algorithm to be used; and the first apparatus 210 generates the key report indicating the key and the cipher algorithm for generating the key.

In some example embodiments, in accordance with a determination that a further key control message, received from the second apparatus 220, indicates the first apparatus to confirm a key corresponding to a currently used cipher algorithm, the first apparatus 210, reports, to the second apparatus, the key and the cipher algorithm; and the first apparatus 210 starts using the key for communication between the first apparatus and the second apparatus.

In some example embodiments, generating the key report includes, in accordance with a determination that the key control message indicates the first apparatus 210 to confirm a key corresponding to the currently used cipher algorithm, the first apparatus 210 generates the key report indicating the key and the currently used cipher algorithm.

In some example embodiments, the first apparatus 210 keeps using the key for communication between the first apparatus 210 and the second apparatus 220.

In some example embodiments, the first apparatus 210 uses a first key corresponding to a first cipher algorithm, and generating the key report further includes: in accordance with a determination that management information base, MIB, reset message is received, the first apparatus 210 removes a configuration associated with the optical network unit management and control interface, OMCI, while keeping using the first key; in accordance with a determination that the received key control message indicates the first apparatus 210 to generate and transmit a second key corresponding to a second cipher algorithm, the first apparatus 210 generates the second key based on the key control message, the second cipher algorithm being the same as the first cipher algorithm or being different from the first cipher algorithm; and the first apparatus 210 transmits to the second apparatus 220, the key report indicating the second key and the second cipher algorithm.

In some example embodiments, the second cipher algorithm is a default cipher algorithm.

In some example embodiments, the first apparatus 210 uses a first key corresponding to a first cipher algorithm, and wherein the instructions, when executed by the at least one processor, further cause the first apparatus 210 to: in accordance with a determination that management information base, MIB, reset message is received, the first apparatus 210 removes a configuration associated with the optical network unit management and control interface, OMCI, while keeping using the first key; in accordance with a determination that the received key control message indicates the first apparatus 210 to confirm the first key corresponding to the currently used first cipher algorithm, the first apparatus 210 keeps using the first key for communication between the first apparatus 210 and the second apparatus 220; and the first apparatus 210 transmits, to the second apparatus, the key report indicating the first key and the first cipher algorithm.

In some example embodiments, the key control message is received in a Physical Layer Operations, Administration and Maintenance, PLOAM, message.

In some example embodiments, the MIB reset message is received via the control interface OMCI.

In some example embodiments, the first apparatus 210 includes an optical network unit, ONU, and the second apparatus 220 includes an Optical Line Terminal, OLT.

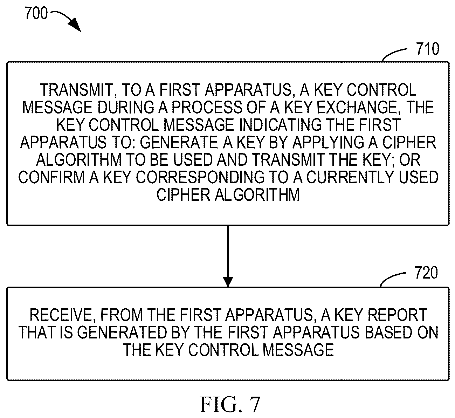

FIG. 7 shows a flowchart of a communication method 700 for a passive optical network according to some example embodiments of the present disclosure. The method 700 may be implemented, for example, in the communication environment 200, e.g., at the second apparatus 220.

At block 710, the second apparatus 220 transmits, to a first apparatus 210, a key control message during a process of a key exchange, the key control message indicating the first apparatus 210 to: generate a key by applying a cipher algorithm to be used and transmit the key; or confirm a key corresponding to a currently used cipher algorithm.

At block 620, the second apparatus 220 receives, from the first apparatus 210, a key report that is generated by the first apparatus 210 based on the key control message.

In some example embodiments, the key control message is transmitted in a Physical Layer Operations, Administration and Maintenance, PLOAM, message.

In some example embodiments, the second apparatus 220 receives the key report indicating the key, generated by applying the cipher algorithm, and the cipher algorithm to be used

In some example embodiments, the second apparatus 220 receives the key report indicating the key corresponding to the currently used cipher algorithm and the currently used cipher algorithm.

In some example embodiments, the first apparatus 210 includes an optical network unit, ONU, and the second apparatus includes an optical line terminal, OLT.

In some example embodiments, an apparatus (e.g., first apparatus 210) for a passive optical network may include means for performing respective steps of method 600. These means may be implemented in any suitable manner. For example, the means may be implemented as a circuit apparatus or a software module.

In some example embodiments, the first apparatus 210 may include means for receiving, from a second apparatus 220, a key control message during a process of a key exchange, the key control message indicating a first apparatus to: generate a key by applying a cipher algorithm to be used and transmit the key; or confirm a key corresponding to a currently used cipher algorithm; generating a key report based on the key control message; and transmitting the key report to the second apparatus 220.

In some example embodiments, the first apparatus 210 further includes: means for in accordance with a determination that the key control message indicates the first apparatus 210 to generate the key by applying the cipher algorithm to be used and transmit the key, generating the key by the cipher algorithm to be used; and means for generating the key report indicating the key and the cipher algorithm for generating the key.

In some example embodiments, the first apparatus 210 further includes: means for in accordance with a determination that a further key control message, received from the second apparatus 220, indicates the first apparatus 210 to confirm a key corresponding to a currently used cipher algorithm, report, to the second apparatus 220, the key and the cipher algorithm; and means for starting using the key for communication between the first apparatus 210 and the second apparatus 220.

In some example embodiments, the first apparatus 210 further includes: means for in accordance with a determination that the key control message indicates the first apparatus 210 to confirm a key corresponding to the currently used cipher algorithm, generating the key report indicating the key and the currently used cipher algorithm.

In some example embodiments, the first apparatus 210 further includes: means for in accordance with a determination that management information base, MIB, reset message is received, removing a configuration associated with the optical network unit management and control interface, OMCI, while keeping using the first key; means for in accordance with a determination that the received key control message indicates the first apparatus 210 to generate and transmit a second key corresponding to a second cipher algorithm, generating the second key based on the key control message, the second cipher algorithm being the same as the first cipher algorithm or being different from the first cipher algorithm; and means for transmitting, to the second apparatus 220, the key report indicating the second key and the second cipher algorithm.

In some example embodiments, the second cipher algorithm is a default cipher algorithm.

In some example embodiments, the first apparatus 210 further includes: means for in accordance with a determination that management information base, MIB, reset message is received, removing a configuration associated with the optical network unit management and control interface, OMCI, while keeping using the first key; means for in accordance with a determination that the received key control message indicates the first apparatus 210 to confirm the first key corresponding to the currently used first cipher algorithm, keeping using the first key for communication between the first apparatus 210 and the second apparatus 220; and means for transmitting, to the second apparatus 220, the key report indicating the first key and the first cipher algorithm.

In some example embodiments, the first apparatus 210 includes an optical network unit, ONU, and the second apparatus 220 includes an Optical Line Terminal, OLT.

In some example embodiments, an apparatus (e.g., second apparatus 220) for a passive optical network may include means for performing respective steps of method 700. These means may be implemented in any suitable manner. For example, the means may be implemented as a circuit apparatus or a software module.

In some example embodiments, the second apparatus 220 may include means for transmitting, to a first apparatus 210, a key control message during a process of a key exchange, the key control message indicating the first apparatus 210 to: generate a key by applying a cipher algorithm to be used and transmit the key; or confirm a key corresponding to a currently used cipher algorithm; and receiving, from the first apparatus 210, a key report that is generated by the first apparatus 210 based on the key control message.

In some example embodiments, the key control message is transmitted in a Physical Layer Operations, Administration and Maintenance, PLOAM, message.

In some example embodiments, the second apparatus 220 further includes means for receiving the key report indicating the key, generated by applying the cipher algorithm, and the cipher algorithm to be used.

In some example embodiments, the second apparatus 220 further includes: means for receiving the key report indicating the key corresponding to the currently used cipher algorithm and the currently used cipher algorithm.

In some example embodiments, the first apparatus 210 includes an optical network unit, ONU, and the second apparatus 220 includes an optical line terminal, OLT.

Several examples of the first apparatus 210 and the second apparatus 220 are described above in connection with FIG. 1-FIG. 6. In some example embodiments, the first apparatus 210 and the apparatus 220 may combine a communication system. Any other suitable component or device may also be included in the communication system.

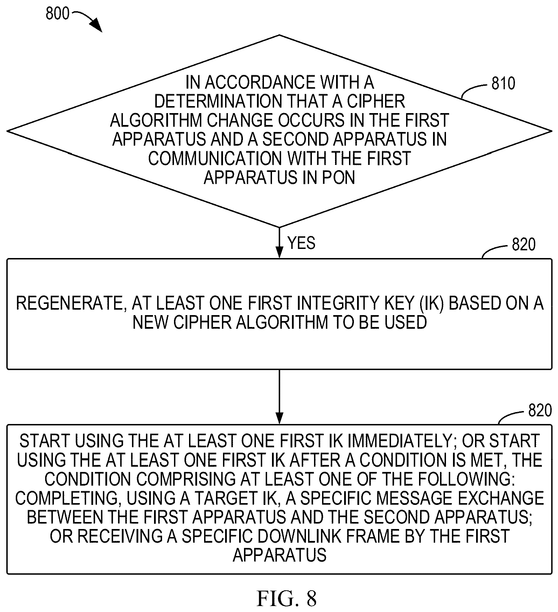

FIG. 8 shows a flowchart of a communication method 800 for a passive optical network according to some example embodiments of the present disclosure. The method 800 may be implemented, for example, in the communication environment 200, e.g., at the first apparatus 210.

At block 810, in accordance with a determination that a cipher algorithm change occurs in the first apparatus 210 and a second apparatus 220 in communication with the first apparatus 210 in PON, at block 810, the first apparatus 210 regenerates at least one first integrity key, IK, based on a new cipher algorithm to be used.

At block 830, the first apparatus 210 starts using the at least one first IK immediately; or the first apparatus 210 starts using the at least one first IK after a condition is met, the condition including at least one of the following: completing, using a target IK, a specific message exchange between the first apparatus 210 and the second apparatus 220; or receiving a specific downlink frame by the first apparatus 210.

In some example embodiments, the first apparatus 210 generates message integrity check, MIC, information based on the at least one first IK; the first apparatus 210 transmits, to the second apparatus, a message including the MIC information; in accordance with a determination that a further message including another MIC information is received from the second apparatus, the first apparatus 210 determines whether the further MIC information is verifiable by using the at least one first IK; and in accordance with a determination that the further MIC information is verifiable by using the at least one first IK, the first apparatus 210 discards at least one original IK previously used by the first apparatus 210.

In some example embodiments, in accordance with a determination that a message including MIC information is received from the second apparatus 220, the first apparatus 210 determines whether the MIC information is verifiable by using the at least one first IK; in accordance with a determination that the MIC information is verifiable by using the at least one first IK, the first apparatus 210 generates, using the at least one first IK, a further message including another MIC information; and the first apparatus 210 transmits the further message to the second apparatus.

In some example embodiments, in accordance with a determination that the MIC information is unverifiable by using the at least one first IK, the first apparatus 210 verifies the MIC information using at least one original IK previously used by the first apparatus.

In some example embodiments, the message includes a specific message for querying a security mode OMCI message, or a PLOAM message for querying a registration identifier.

In some example embodiments, in accordance with a determination that a specific message, that is generated by the second apparatus 220 using a target IK, is received, the first apparatus 210 generates, using the target IK, a response for a specific message; and the first apparatus 210 starts using the at least one first IK after transmitting the response for the specific message to the second apparatus 220.

In some example embodiments, the specific message includes a registration request PLOAM message and the target IK includes a default IK, a previously used original PLOAM IK, or a first PLOAM IK; or the specific message includes a secure mode OMCI message and the target IK includes a default IK, a previously used original OMCI IK, or a first OMCI IK.

In some example embodiments, the first apparatus 210 receives, from the second apparatus, a configuration of frame counter value indicating an IK switching via a get-set-capabilities PLOAM message; and in accordance with a determination that a downlink frame, corresponding to the frame counter value, is received from the second apparatus, the first apparatus 210 starts using the at least one first IK. In some example embodiments, the at least one first IK includes at least one of the following: a first OMCI IK, or a first PLOAM IK.

In some example embodiments, the first apparatus 210 starts using the first OMCI IK and the first PLOAM IK at the same time, or the first apparatus 210 starts using the first OMCI IK and the first PLOAM IK respectively.

In some example embodiments, the first apparatus includes an optical network unit, ONU, and the second apparatus includes an optical line terminal, OLT.

In some example embodiments, an apparatus (e.g., first apparatus 210) for a passive optical network may include means for performing respective steps of method 800. These components may be implemented in any suitable manner. For example, a component may be implemented as a circuit apparatus or a software module.

In some example embodiments, the first apparatus 210 may include means for generating message integrity check, MIC, information based on the at least one first IK; means for transmitting, to the second apparatus, a message including the MIC information; means for in accordance with a determination that a further message including another MIC information is received from the second apparatus, determining whether the further MIC information is verifiable by using the at least one first IK; and means for in accordance with a determination that the further MIC information is verifiable by using the at least one first IK, discarding at least one original IK previously used by the first apparatus.

In some example embodiments, the first apparatus 210 may include means for in accordance with a determination that a message including MIC information is received from the second apparatus 220, determining whether the MIC information is verifiable by using the at least one first IK; means for in accordance with a determination that the MIC information is verifiable by using the at least one first IK, generating, using the at least one first IK, a further message including another MIC information; and means for transmitting the further message to the second apparatus.

In some example embodiments, the first apparatus 210 may include means for in accordance with a determination that the MIC information is unverifiable by using the at least one first IK, verifying the MIC information using at least one original IK previously used by the first apparatus.

In some example embodiments, the message includes a specific message for querying a security mode OMCI message, or a PLOAM message for querying a registration identifier.

In some example embodiments, the first apparatus 210 may include means for in accordance with a determination that a specific message, that is generated by the second apparatus 220 using a target IK, is received, generating, using the target IK, a response for a specific message; and means for the first apparatus 210 starting using the at least one first IK after transmitting the response for the specific message to the second apparatus 220.

In some example embodiments, the specific message includes a registration request PLOAM message and the target IK includes a default IK, a previously used original PLOAM IK, or a first PLOAM IK; or the specific message includes a secure mode OMCI message and the target IK includes a default IK, a previously used original OMCI IK, or a first OMCI IK.

In some example embodiments, the first apparatus 210 may include means for receiving, from the second apparatus, a configuration of frame counter value indicating an IK switching via a get-set-capabilities PLOAM message; and means for in accordance with a determination that a downlink frame, corresponding to the frame counter value, is received from the second apparatus, starting using the at least one first IK.

In some example embodiments, the at least one first IK including at least one of the following: a first OMCI IK, or a first PLOAM IK.

In some example embodiments, the first apparatus 210 may include means for starting using the first OMCI IK and the first PLOAM IK at the same time, or means for starting using the first OMCI IK and the first PLOAM IK respectively.

In some example embodiments, the first apparatus 210 includes an optical network unit, ONU, and the second apparatus 220 includes an optical line terminal, OLT.

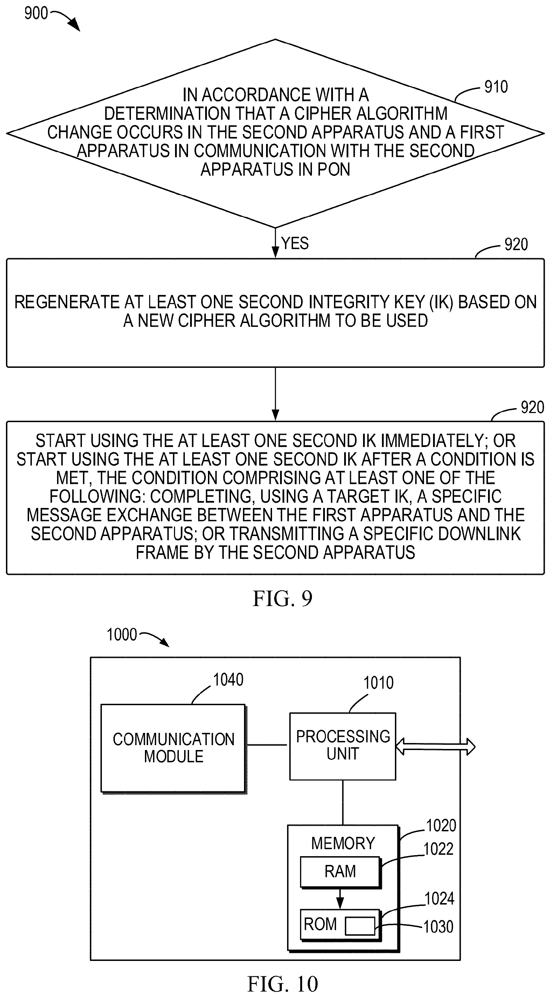

FIG. 9 shows a flowchart of a communication method 900 for a passive optical network according to some example embodiments of the present disclosure. The method 900 may be implemented, for example, in the communication environment 200, e.g., at the second apparatus 220.

At block 910, in accordance with a determination that a cipher algorithm change occurs in the second apparatus 220 and a first apparatus 210 in communication with the second apparatus in PON, at block 910, the second apparatus 220 regenerates at least one second integrity key, IK, based on a new cipher algorithm to be used.

At block 930, the second apparatus 220 starts using the at least one second IK immediately; or the second apparatus 220 starts using the at least one second IK after a condition is met, the condition including at least one of the following: completing, using a target IK, a specific message exchange between the first apparatus 210 and the second apparatus 220; or transmitting a specific downlink frame by the second apparatus 220.

In some example embodiments, in accordance with a determination that a message including MIC information is received from the first apparatus 210, the second apparatus 220 determines whether the MIC information is verifiable by using the at least one second IK; in accordance with a determination that the MIC information is verifiable by using the at least one second IK, the second apparatus 220 generates a further message including further MIC information using the at least one second IK; and transmits the further message to the first apparatus 210.

In some example embodiments, in accordance with a determination that the MIC information is unverifiable by using the at least one second IK, the second apparatus 220 verifies the MIC information using at least one original IK previously used by the second apparatus.

In some example embodiments, the second apparatus 220 generates message integrity check, MIC, information based on the at least one second IK; the second apparatus 220 transmits, to the first apparatus, a message including the MIC information; in accordance with a determination that a further message including further MIC information is received from the first apparatus, the second apparatus 220 determines whether the further MIC information is verifiable by using the at least one second IK; and in accordance with a determination that the further MIC information is verifiable by using the at least one second IK, the second apparatus 220 discards at least one original IK previously used by the second apparatus.

In some example embodiments, in accordance with a determination that a response for the message is not received, the second apparatus 220 retransmits the message to the first apparatus 210.

In some example embodiments, the message includes a specific message for querying a secure mode OMCI message, or a PLOAM message for querying a registration identification.

In some example embodiments, the second apparatus 220 generates a specific message using the target IK ; the second apparatus 220 transmits the specific message to the first apparatus; and in accordance with a determination that a response for the locked specific message is received from the first apparatus, the second apparatus 220 starts using the at least one second IK.

In some example embodiments, the specific message includes a registration request PLOAM message and the target IK including a default IK, a previously used original PLOAM IK, or a second PLOAM IK; or the specific message includes a secure mode OMCI message and the target IK includes a default IK, a previously used original OMCI IK, or a second OMCI IK.

In some example embodiments, the second apparatus 220 transmits, to the first apparatus 210, a configuration of frame counter value indicating an IK switching via a get-set-capabilities PLOAM message; and the second apparatus 220 starts using the at least one second IK based on the frame counter value.

In some example embodiments, the at least one second IK includes at least one of the following: a second OMCI IK, or second PLOAM IK.

In some example embodiments, the second apparatus 220 starts using the second OMCI IK and the second PLOAM IK at the same time, or the second apparatus 220 starts using the second OMCI IK and the second PLOAM IK respectively.

In some example embodiments, the first apparatus 210 includes an optical network unit, ONU, and the second apparatus 220 includes an optical line terminal, OLT.

In some example embodiments, an apparatus (e.g., second apparatus 220) for a passive optical network may include means for performing respective steps of method 900. These means may be implemented in any suitable manner. For example, the means may be implemented as a circuit apparatus or a software module.

In some example embodiments, the second apparatus 220 may include means for in accordance with a determination that a message including MIC information is received from the first apparatus 210, determining whether the MIC information is verifiable by using the at least one second IK; means for in accordance with a determination that the MIC information is verifiable by using the at least one second IK, generating a further message including further MIC information using the at least one second IK; and means for transmitting the further message to the first apparatus.

In some example embodiments, the second apparatus 220 may include means for in accordance with a determination that the MIC information is unverifiable by using the at least one second IK, verifying the MIC information using at least one original IK previously used by the second apparatus.

In some example embodiments, the second apparatus 220 may include means for generating message integrity check, MIC, information based on the at least one second IK; means for transmitting, to the first apparatus 210, a message including the MIC information; means for in accordance with a determination that a further message including further MIC information is received from the first apparatus, determining whether the further MIC information is verifiable by using the at least one second IK; and means for in accordance with a determination that the further MIC information is verifiable by using the at least one second IK, discarding at least one original IK previously used by the second apparatus 220.

In some example embodiments, the second apparatus 220 may include means for in accordance with a determination that a response for the message is not received, retransmitting the message to the first apparatus 210.

In some example embodiments, the message includes a specific message for querying a secure mode OMCI message, or a PLOAM message for querying a registration identification.

In some example embodiments, the second apparatus 220 may include means for generating a specific message using the target IK; means for transmitting the specific message to the first apparatus; and means for in accordance with a determination that a response for the locked specific message is received from the first apparatus, starting using the at least one second IK.

In some example embodiments, the specific message includes a registration request PLOAM message and the target IK including a default IK, a previously used original PLOAM IK, or a second PLOAM IK; or the specific message includes a secure mode OMCI message and the target IK includes a default IK, a previously used original OMCI IK, or a second OMCI IK.

In some example embodiments, the second apparatus 220 may include means for transmitting, to the first apparatus 210, a configuration of frame counter value indicating an IK switching via a get-set-capabilities PLOAM message; and means for starting using the at least one second IK based on the frame counter value.

In some example embodiments, the at least one second IK includes at least one of the following: a second OMCI IK, or second PLOAM IK.

In some example embodiments, the second apparatus 220 may include means for starting using the second OMCI IK and the second PLOAM IK at the same time, or means for start using the second OMCI IK and the second PLOAM IK respectively.

In some example embodiments, the first apparatus 210 includes an optical network unit, ONU, and the second apparatus 220 includes an optical line terminal, OLT.

FIG. 10 is a simplified block diagram of a device 1000 that is suitable for implementing example embodiments of the present disclosure. The device 1000 may be provided to implement the first apparatus 210 and the second apparatus 220 in the communication environment 200. As shown, the device 1000 includes one or more processing units 1010, one or more memories 1020 coupled to the processing unit 1010, and a communication module 1040 coupled to the processing unit 1010.

The communication module 1040 is for bi-directional communication. In some example embodiments, the communication module 1040 may have at least one antenna to facilitate communication. In some example embodiments, the communication module 1040 may include one or more communication interfaces. The communication interface may represent any interface required to communicate with other network elements.

The processing unit 1010 may be of any type suitable to the local technical network and may include, but is not limited to, one or more of the following: general purpose computers, special purpose computers, microcontrollers, digital signal processors (DSP), and a controller-based multi-core controller architecture. The device 1000 may have multiple processors, such as an application specific integrated circuit chip that is slaved in time to a clock which synchronized the main processor.

The memory 1020 may include one or more non-volatile memories and one or more volatile memories. Examples of non-volatile memory include, but are not limited to, a read-only memory (ROM) 1024, an erasable programmable read-only memory (EPROM), a flash memory, a hard disk, compact disc (CD), a digital video disk (DVD), and other magnetic storage and/or optical storage. Examples of the volatile memory include, but are not limited to, a random access memory (RAM) 1022 and other volatile memory that will not last in the power-down duration.

Computer program 1030 includes computer-executable instructions that are executed by associated processing unit 1010. Computer program 1030 may be stored in ROM 1024. Processing unit 1010 may perform any suitable action and processing by loading computer program 1030 into RAM 1022.

The example embodiments of the present disclosure may be implemented by means of computer program 1030, such that device 1000 may perform any of the process of the present disclosure as discussed with reference to Figs. 2-9. The example embodiments of the present disclosure may also be implemented by hardware or by a combination of software and hardware.

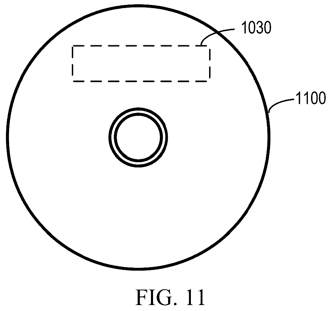

In some example embodiments, the computer program 1030 may be tangibly contained in a computer-readable medium, which may be included in the device 1000, such as in the memory 1020, or other storage device that may be accessed by the device 1000. The computer program 1030 may be loaded from a computer-readable medium to the RAM 1022 for execution. The computer-readable medium may include any type of tangible non-volatile memory, such as ROM, EPROM, flash memory, hard disk, CD, DVD, or the like. FIG. 11 illustrates an example of a computer-readable medium 1100 in the form of a CD or DVD according to some example embodiments of the present disclosure. Computer readable medium 1100 has a computer program 1030 stored thereon.

In general, various embodiments of the present disclosure may be implemented in hardware or special purpose circuitry, software, logic, or any combination thereof. Some aspects may be implemented in hardware, while other aspects may be implemented in firmware or software, which may be executed by a controller, microprocessor, or other computing device. Although various aspects of example embodiments of the present disclosure are shown and described as block diagrams, flowcharts, or using some other diagrammatic representation, it should be understood that the blocks, apparatuses, systems, techniques, or methods described herein may be implemented as, for example, non-limiting examples, hardware, software, firmware, specific purpose circuits or logic, general purpose hardware or controllers, or other computing devices, or some combination thereof.

The present disclosure also provides at least one computer program product tangibly stored on a computer-readable storage medium. In some example embodiments, the computer-readable storage medium may be non-transitory. The computer program product includes computer-executable instructions, such as instructions included in a program module, that being executed in a device on a real or virtual processor of a target, to perform the method 600 as described above with reference to FIG. 6, the method 1000 described with reference to FIG. 10, the method 1100 described with reference to FIG. 11, or the method 900 described with reference to FIG. 9. Generally, program modules include routines, programs, libraries, objects, classes, components, data structures, etc. that perform particular tasks or implement particular abstract data types. In various embodiments, the functionality of program modules may be combined or segmented between program modules as desired. Machine executable instructions for program modules may be executed within a local or distributed device. In distributed devices, program modules may be located in local and remote storage media.

Computer program code for implementing the methods of the present disclosure may be written in one or more programming languages. These computer program code may be provided to a processor of a general purpose computer, special purpose computer, or other programmable data processing apparatus, such that the program code, when executed by a computer or other programmable data processing apparatus, causes the functions/operations specified in the flowchart and/or block diagram to be implemented. The program code may be performed entirely on a computer, partly on a computer, as a stand-alone software package, partly on a computer and partly on a remote computer or entirely on a remote computer or server.

In the context of the present disclosure, computer program code or related data may be carried by any suitable carrier to enable a device, apparatus, or processor to perform the various processes and operations described above. Examples of carriers include signals, computer-readable media, and the like. Examples of signals may include electrical, optical, radio, sound, or other forms of propagating signals, such as carriers, infrared signals, and the like.

The computer-readable medium may be any tangible medium containing or storing a program for or with respect to an instruction execution system, apparatus, or device. The computer readable medium may be a computer readable signal medium or a computer readable storage medium. Computer-readable media may include, but are not limited to, electronic, magnetic, optical, electromagnetic, infrared, or semiconductor systems, apparatuses, or devices, or any suitable combinations thereof. A more detailed example of a computer-readable storage medium includes an electrical connection with one or more wires, a portable computer diskette, a hard disk, a random access memory (RAM), a read-only memory (ROM), an erasable programmable read-only memory (EPROM or Flash memory), an optical storage device, a magnetic storage device, or any suitable combination thereof.

Moreover, although the operations of the methods of the present disclosure are described in a particular order in the figures, this is not a requiring or implying that the operations must be performed in that particular order, or that all of the illustrated operations must be performed to achieve the desired results. Rather, the steps depicted in the flowchart may change the order of execution. Additionally or alternatively, certain steps may be omitted, combining multiple steps into one step, and/or decomposing one step into multiple steps. It should also be noted that the features and functions of two or more devices according to the present disclosure may be embodied in one device. Conversely, the features and functions of one of the devices described above may be further divided into being embodied by multiple devices.

While the present disclosure has been described with reference to several specific embodiments, it should be understood that the present disclosure is not limited to the specific embodiments disclosed. The present disclosure is intended to cover various modifications and equivalent arrangements included within the spirit and scope of the appended claims.

In the following, further aspects and example embodiments of the disclosure are presented, which, in some examples, may be combined with each other and/or with any of the aspects and example embodiments explained above.

Some example embodiments relate to a first apparatus for a passive optical network, PON, comprising: at least one processor; and at least one memory storing instructions that, when executed by the at least one processor, cause the first apparatus at least to: receive, from a second apparatus, a key control message during a process of a key exchange, the key control message indicating the first apparatus to: generate a key by applying a cipher algorithm to be used and transmit the key; or confirm a key corresponding to a currently used cipher algorithm; generate a key report based on the key control message; and transmit the key report to the second apparatus. In some example embodiments, generating the key report comprises: in accordance with a determination that the key control message indicates the first apparatus to generate the key by applying the cipher algorithm to be used and transmit the key, generating the key by the cipher algorithm to be used; and generating the key report indicating the key and the cipher algorithm for generating the key. In some examples, the instructions, when executed by the at least one processor, further cause the first apparatus to: in accordance with a determination that a further key control message, received from the second apparatus, indicates the first apparatus to confirm a key corresponding to a currently used cipher algorithm, report, to the second apparatus, the key and the cipher algorithm; and start using the key for communication between the first apparatus and the second apparatus. In some example embodiments, generating the key report comprises: in accordance with a determination that the key control message indicates the first apparatus to confirm a key corresponding to the currently used cipher algorithm, generating the key report indicating the key and the currently used cipher algorithm. In some examples embodiments, the instructions, when executed by the at least one processor, further cause the first apparatus to: keep using the key for communication between the first apparatus and the second apparatus. In some examples, the first apparatus uses a first key corresponding to a first cipher algorithm, and wherein generating the key report further comprises: in accordance with a determination that management information base, MIB, reset message is received, removing a configuration associated with the optical network unit management and control interface, OMCI, while keeping using the first key; in accordance with a determination that the received key control message indicates the first apparatus to generate and transmit a second key corresponding to a second cipher algorithm, generating the second key based on the key control message, the second cipher algorithm being the same as the first cipher algorithm or being different from the first cipher algorithm; and transmitting, to the second apparatus, the key report indicating the second key and the second cipher algorithm. In some example embodiments, the second cipher algorithm is a default cipher algorithm. In some example embodiments, the first apparatus uses a first key corresponding to a first cipher algorithm, and the instructions, when executed by the at least one processor, further cause the first apparatus to: in accordance with a determination that management information base, MIB, reset message is received, remove a configuration associated with the optical network unit management and control interface, OMCI, while keeping using the first key; in accordance with a determination that the received key control message indicates the first apparatus to confirm the first key corresponding to the currently used first cipher algorithm, keep using the first key for communication between the first apparatus and the second apparatus; and transmit, to the second apparatus, the key report indicating the first key and the first cipher algorithm. In some example embodiments, the key control message is received in a Physical Layer Operations, Administration and Maintenance, PLOAM, message. In some example embodiments, the MIB reset message is received via the OMCI. In some example embodiments, the first apparatus comprises an optical network unit, ONU, and the second apparatus comprises an Optical Line Terminal, OLT.

Some example embodiments relate to a second apparatus for a passive optical network, PON, comprising: at least one processor; and at least one memory storing instructions that, when executed by the at least one processor, cause the second apparatus at least to: transmit, to a first apparatus, a key control message during a process of a key exchange, the key control message indicating the first apparatus to: generate a key by applying a cipher algorithm to be used and transmit the key; or confirm a key corresponding to a currently used cipher algorithm; and receive, from the first apparatus, a key report that is generated by the first apparatus based on the key control message. In some example embodiments, the key control message is transmitted in a Physical Layer Operations, Administration and Maintenance, PLOAM, message. In some example embodiments, the instructions, when executed by the at least one processor, further cause the second apparatus to: receive the key report indicating the key, generated by applying the cipher algorithm, and the cipher algorithm to be used. In some example embodiments, the instructions, when executed by the at least one processor, further cause the second apparatus to: receive the key report indicating the key corresponding to the currently used cipher algorithm and the currently used cipher algorithm. In some example embodiments, the first apparatus comprises an optical network unit, ONU, and the second apparatus comprises an optical line terminal, OLT.

Some example embodiments relate to a communication method, comprising: receiving, from a second apparatus, a key control message during a process of a key exchange, the key control message indicating a first apparatus to: generate a key by applying a cipher algorithm to be used and transmit the key; or confirm a key corresponding to a currently used cipher algorithm; generating a key report based on the key control message; and transmitting the key report to the second apparatus.

Some example embodiments relate to a communication method, comprising: transmitting, to a first apparatus, a key control message during a process of a key exchange, the key control message indicating the first apparatus to: generate a key by applying a cipher algorithm to be used and transmit the key; or confirm a key corresponding to a currently used cipher algorithm; and receiving, from the first apparatus, a key report that is generated by the first apparatus based on the key control message.

**Some** example embodiments relate to an apparatus for communication, comprising: means for receiving, from a second apparatus, a key control message during a process of a key exchange, the key control message indicating a first apparatus to: generate a key by applying a cipher algorithm to be used and transmit the key; or confirm a key corresponding to a currently used cipher algorithm; means for generating a key report based on the key control message; and means for transmitting the key report to the second apparatus.

Some example embodiments realate to an apparatus for communication, comprising: means for transmitting, to a first apparatus, a key control message during a process of a key exchange, the key control message indicating the first apparatus to: generate a key by applying a cipher algorithm to be used and transmit the key; or confirm a key corresponding to a currently used cipher algorithm; and means for receiving, from the first apparatus, a key report that is generated by the first apparatus based on the key control message.

**Claims**

1. A first apparatus for a passive optical network, PON, comprising:

   at least one processor; and
   at least one memory storing instructions that, when executed by the at least one processor, cause the first apparatus at least to:

      in accordance with a determination (810) that a cipher algorithm change occurs in the first apparatus and a second apparatus in communication with the first apparatus in PON, regenerate (820), at least one first integrity key, IK, based on a new cipher algorithm to be used;
      start (820) using the at least one first IK immediately; or
      start using the at least one first IK after a condition is met, the condition comprising at least one of the following:

         completing, using a target IK, a specific message exchange between the first apparatus and the second apparatus; or
         receiving a specific downlink frame by the first apparatus.

2. The first apparatus of claim 1, wherein the instructions, when executed by the at least one processor, further cause the first apparatus to:

generate message integrity check, MIC, information based on the at least one first IK;

transmit, to the second apparatus, a message comprising the MIC information;

in accordance with a determination that a further message comprising another MIC information is received from the second apparatus, determine whether the further MIC information is verifiable by using the at least one first IK; and

in accordance with a determination that the further MIC information is verifiable by using the at least one first IK, discard at least one original IK previously used by the first apparatus.

3. The first apparatus of claim 1, wherein the instructions, when executed by the at least one processor, further cause the first apparatus to:

in accordance with a determination that a message comprising MIC information is received from the second apparatus, determine whether the MIC information is verifiable by using the at least one first IK;

in accordance with a determination that the MIC information is verifiable by using the at least one first IK, generate, using the at least one first IK, a further message comprising another MIC information; and

transmit the further message to the second apparatus

, wherein for example the instructions, when executed by the at least one processor, further cause the first apparatus to:

in accordance with a determination that the MIC information is unverifiable by using the at least one first IK, verify the MIC information using at least one original IK previously used by the first apparatus.

4. The first apparatus of any of claims 2 to3, wherein the message comprises a specific message for querying a security mode OMCI message, or a PLOAM message for querying a registration identifier.

5. The first apparatus of claim 1, wherein the instructions, when executed by the at least one processor, further cause the first apparatus to:

in accordance with a determination that a specific message, that is generated by the second apparatus using a target IK, is received, generate, using the target IK, a response for a specific message; and

start using the at least one first IK after transmitting the response for the specific message to the second apparatus

, wherein for example

the specific message comprises a registration request PLOAM message and the target IK comprises a default IK, a previously used original PLOAM IK, or a first PLOAM IK; or

the specific message comprises a secure mode OMCI message and the target IK comprises a default IK, a previously used original OMCI IK, or a first OMCI IK.

6. The first apparatus of claim 1, wherein the instructions, when executed by the at least one processor, further cause the first apparatus to:

receive, from the second apparatus, a configuration of frame counter value indicating an IK switching via a get-set-capabilities PLOAM message; and

in accordance with a determination that a downlink frame, corresponding to the frame counter value, is received from the second apparatus, start using the at least one first IK.

7. The first apparatus according to claim 1, the at least one first IK comprising at least one of the following:

a first OMCI IK, or

a first PLOAM IK

, wherein for example the instructions, when executed by the at least one processor, further cause the first apparatus to:

start using the first OMCI IK and the first PLOAM IK at the same time, or

start using the first OMCI IK and the first PLOAM IK respectively.

8. The first apparatus of claim 1, wherein the first apparatus comprises an optical network unit, ONU, and the second apparatus comprises an optical line terminal, OLT.

9. A second apparatus for a passive optical network, PON, comprising:

   at least one processor; and
   at least one memory storing instructions that, when executed by the at least one processor, cause the second apparatus at least to:

   in accordance with a determination (910) that a cipher algorithm change occurs in the second apparatus and a first apparatus in communication with the second apparatus in PON, regenerate (920) at least one second integrity key, IK, based on a new cipher algorithm to be used;
   start (920) using the at least one second IK immediately; or
   start using the at least one second IK after a condition is met, the condition comprising at least one of the following:

   completing, using a target IK, a specific message exchange between the first apparatus and the second apparatus; or
   transmitting a specific downlink frame by the second apparatus

10. The second apparatus of claim 9, wherein the instructions, when executed by the at least one processor, further cause the second apparatus to:

   in accordance with a determination that a message comprising MIC information is received from the first apparatus, determine whether the MIC information is verifiable by using the at least one second IK;
   in accordance with a determination that the MIC information is verifiable by using the at least one second IK, generate a further message comprising further MIC information using the at least one second IK; and
   transmit the further message to the first apparatus
   , wherein for example the instructions, when executed by the at least one processor, further cause the second apparatus to:
   in accordance with a determination that the MIC information is unverifiable by using the at least one second IK, verify the MIC information using at least one original IK previously used by the second apparatus.

11. The second apparatus of claim 9, wherein the instructions, when executed by the at least one processor, further cause the second apparatus to:

   generate message integrity check, MIC, information based on the at least one second IK;
   transmit, to the first apparatus, a message comprising the MIC information;
   in accordance with a determination that a further message comprising further MIC information is received from the first apparatus, determine whether the further MIC information is verifiable by using the at least one second IK; and
   in accordance with a determination that the further MIC information is verifiable by using the at least one second IK, discard at least one original IK previously used by the second apparatus
   , wherein for example the instructions, when executed by the at least one processor, further cause the second apparatus to:
   in accordance with a determination that a response for the message is not received, retransmit the message to the first apparatus.

12. The second apparatus of any of claims 10 to 11, wherein the message comprises a specific message for querying a secure mode OMCI message, or a PLOAM message for querying a registration identification.

13. The second apparatus of claim 9, wherein the instructions, when executed by the at least one processor, further cause the second apparatus to:

   generate a specific message using the target IK ;
   transmit the specific message to the first apparatus; and
   in accordance with a determination that a response for the specific message is received from the first apparatus, start using the at least one second IK
   , wherein for example the specific message comprises a registration request PLOAM message and the target IK comprising a default IK, a previously used original PLOAM IK, or a second PLOAM IK; or
   the specific message comprises a secure mode OMCI message and the target IK comprises a default IK, a previously used original OMCI IK, or a second OMCI IK.

14. The second apparatus of claim 9, wherein the instructions, when executed by the at least one processor, further cause the second apparatus to:

transmit, to the first apparatus, a configuration of frame counter value indicating an IK switching via a get-set-capabilities PLOAM message; and
start using the at least one second IK based on the frame counter value
, wherein for example the at least one second IK comprises at least one of the following:

a second OMCI IK, or
second PLOAM IK
, wherein for example the instructions, when executed by the at least one processor, further cause the first apparatus to:

start using the second OMCI IK and the second PLOAM IK at the same time, or
start using the second OMCI IK and the second PLOAM IK respectively.

15. The second apparatus of claim 9, wherein the first apparatus comprises an optical network unit, ONU, and the second apparatus comprises an optical line terminal, OLT.

16. A communication method, comprising:

in accordance with a determination (810) that a cipher algorithm change occurs in a first apparatus and a second apparatus in communication with the first apparatus in PON, regenerating (820) at least one first integrity key (IK) based on a new cipher algorithm to be used;
starting (820) using the at least one first IK immediately; or
starting using the at least one first IK after a condition is met, the condition comprising at least one of the following:

completing, using a target IK, a specific message exchange between the first apparatus and the second apparatus; or
receiving a specific downlink frame by the first apparatus.

17. A communication method includes:

in accordance with a determination (910) that a cipher algorithm change occurs in a second apparatus and a first apparatus in communication with the second apparatus in PON, regenerating (920) at least one second integrity key, IK, based on a new cipher algorithm to be used;
starting (920) using the at least one second IK immediately; or
starting using the at least one second IK after a condition is met, the condition comprising at least one of the following:

completing, using a target IK, a specific message exchange between the first apparatus and the second apparatus; or
transmitting a specific downlink frame by the second apparatus.

18. An apparatus for communication includes:

means for in accordance with a determination (810) that a cipher algorithm change occurs in a first apparatus and a second apparatus in communication with the first apparatus in PON, regenerating (820) at least one first integrity key (IK) based on a new cipher algorithm to be used;
means for starting (820) using the at least one first IK immediately; or
means for starting using the at least one first IK after a condition is met, the condition comprising at least one of the following:

completing, using a target IK, a specific message exchange between the first apparatus and the second apparatus; or
receiving a specific downlink frame by the first apparatus.

**19.** An apparatus for communication includes:

means for in accordance with a determination (910) that a cipher algorithm change occurs in a second apparatus and a first apparatus in communication with the second apparatus in PON, regenerating (920) at least one second integrity key (IK) based on a new cipher algorithm to be used;
means for starting (920) using the at least one second IK immediately; or
means for starting using the at least one second IK after a condition is met, the condition comprising at least one of the following:

completing, using a target IK, a specific message exchange between the first apparatus and the second apparatus; or
transmitting a specific downlink frame by the second apparatus.

**20.** A computer readable storage medium having stored thereon a computer program comprising instructions which, when executed by a processor on a device, cause the device to perform the method according to claim 16, or claim 17.

100A

120

110

| OLT | | ONU |

DEFAULT AES-128
IS IN USE FOR
ONU 110

DEFAULT AES-128 IS IN
USE AFTER ACTIVATION

REPORT THE SECURITY CAPABILITY
102

SM4-128 IS IN USE
AFTER NEW KEY
EXCHANGE

SET THE SECURITY MODE TO SM4-128
104

SM4-128 IS IN USE AFTER
NEW KEY EXCHANGE

TRANSMIT A MIB RESET MESSAGE
106

SM4-128 IS IN USE

THE CIPHER ALGORITHM
IS ABOUT TO SWITCH TO
DEFAULT AES-128, BUT
THE KEY IS STILL FOR
SM4-128

PERFORM A KEY EXCHANGE
108

SM4-128 IS IN USE

AES-128 IS IN USE AFTER
NEW KEY EXCHANGE

CIPHER ALGORITHMS MISMATCH OCCURS
110

FIG. 1A

100B

120

OLT

110

ONU

DEFAULT AES-128 IS IN USE FOR ONU 110

DEFAULT AES-128 IS IN USE AFTER ACTIVATION

REPORT THE SECURITY CAPABILITY
—102—

SM4-128 IS IN USE AFTER NEW KEY EXCHANGE

SET THE SECURITY MODE TO SM4-128
—104—

SM4-128 IS IN USE AFTER NEW KEY EXCHANGE

RECEIVE A KEY EXCHANGE MESSAGE AND A MIB RESET MESSAGE AT THE SAME TIME
—112—

NOT SURE WHETHER KEY EXCHANGE IS FOR SM4-128 OR AES-128

NOT SURE WHETHER KEY EXCHANGE IS FOR SM4-128 OR AES-128

FIG. 1B

100C

120 — OLT

110 — ONU

| | | |
|---|---|---|
| DEFAULT AES-128 IS IN USE FOR ONU 110 | REPORT THE SECURITY CAPABILITY ──102── | DEFAULT AES-128 IS IN USE AFTER ACTIVATION |
| AES-256 IS IN USE AFTER NEW KEY EXCHANGE | SET THE SECURITY MODE TO AES-256 ──104── | AES-256 IS IN USE AFTER NEW KEY EXCHANGE |
| THE CIPHER ALGORITHM IS ABOUT TO SWITCH TO DEFAULT AES-128 , BUT THE KEY IS STILL FOR AES-256 | TRANSMIT A MIB RESET MESSAGE ──106── PERFORM KEY EXCHANGE FOR AES-128 ──114── | THE CIPHER ALGORITHM IS ABOUT TO SWITCH TO DEFAULT AES-128, BUT THE KEY IS STILL FOR AES-256 |
| AES-128 IS IN USE AFTER NEW KEY EXCHANGE | SET THE SECURITY MODE TO AES-256 ──116── | AES-128 IS IN USE AFTER NEW KEY EXCHANGE |
| AES-256 IS IN USE AFTER NEW KEY EXCHANGE | PERFORM THE KEY EXCHANGE FOR AES-256 ──118── | AES-256 IS IN USE AFTER NEW KEY EXCHANGE |

FIG. 1C

200

210
FIRST APPARATUS

220
SECOND APPARATUS

FIG. 2

300

210 FIRST APPARATUS

220 SECOND APPARATUS

REPORT SECURITY CAPABILITY
————302————

SET THE SECURITY MODE TO APPLY A FIRST CIPHER ALGORITHM
————304————

306 A FIRST KEY CORRESPONDING TO THE FIRST CIPHER ALGORITHM IS USED

KEY CONTROL MESSAGE: INDICATING TO GENERATE A SECOND KEY USING A SECOND CIPHER ALGORITHM TO BE USED AND TRANSMIT THE KEY
————308————

310 GENERATE THE SECOND KEY USING THE SECOND CIPHER ALGORITHM AND GENERATE A KEY REPORT

KEY REPORT: INDICATING THE SECOND KEY GENERATED USING SECOND CIPHER ALGORITHM AND THE USED SECOND CIPHER ALGORITHM
————312————

KEY CONTROL MESSAGE: INDICATING TO CONFIRM THE SECOND KEY GENERATED USING THE CURRENTLY USED SECOND CIPHER ALGORITHM
————314————

316 GENERATE A KEY REPORT USING THE CONFIRMED SECOND KEY AND THE SECOND CIPHER ALGORITHM

KEY REPORT: INDICATING THE CURRENTLY USED SECOND CIPHER ALGORITHM AND THE SECOND KEY GENERATED USING THE CURRENTLY USED SECOND CIPHER ALGORITHM
————318————

320 COMMUNICATE USING THE SECOND KEY

FIG. 3

400 ⌐

┌─────────────────┐                              ┌─────────────────┐
│ ⌐210            │                              │ ⌐220            │
│  FIRST APPARATUS│                              │ SECOND APPARATUS│
└─────────────────┘                              └─────────────────┘

┌──────────────────────────────────────────────────────────────────┐
│ 402 USE A FIRST KEY CORRESPONDING TO THE FIRST CIPHER              │
│ ALGORITHM                                                          │
└──────────────────────────────────────────────────────────────────┘

MIB RESET MESSAGE
◄─────────────404─────────────

REMOVE A CONFIGURATION
406 ASSOCIATED WITH OMCI AND
KEEP USING THE FIRST KEY

KEY CONTROL MESSAGE: GENERATE AND
TRANSMIT THE SECOND KEY CORRESPONDING TO
THE SECOND CIPHER ALGORITHM
◄─────────────408─────────────

410 GENERATE THE
SECOND KEY

KEY REPORT: INDICATING THE SECOND KEY
GENERATED USING THE SECOND CIPHER
ALGORITHM AND THE USED SECOND CIPHER
ALGORITHM
─────────────412─────────────►

KEY CONTROL MESSAGE: INDICATING TO
CONFIRM THE FIRST KEY CORRESPONDING TO
THE CURRENTLY USED FIRST CIPHER ALGORITHM
◄─────────────414─────────────

KEY REPORT: INDICATING THE FIRST KEY AND
THE FIRST CIPHER ALGORITHM
─────────────416─────────────►

KEEP USING THE FIRST KEY FOR
418 COMMUNICATION BETWEEN THE
FIRST APPARATUS AND THE
SECOND APPARATUS

FIG. 4

500

110 FIRST APPARATUS
120 SECOND APPARATUS

REGISTRATION STAGE

502 GENERATE PLOAM IK/ OMCI IK

504 GENERATE PLOAM IK/ OMCI IK

VERIFY PLOAM IK AND OMCI IK
506

508 CIPHER ALGORITHM SWITCH OCCURS

510 GENERATE NEW PLOAM IK/OMCI IK USING THE NEW CIPHER ALGORITHM

512 GENERATE NEW PLOAM IK/OMCI IK USING THE NEW CIPHER ALGORITHM

A MESSAGE INCLUDES MIC GENERATED BY NEW PLOAM IK/OMCI IK
514

516 VERIFY THE MESSAGE USING NEW PLOAM IK/OMCI IK

A MESSAGE INCLUDES MIC GENERATED BY NEW PLOAM IK/OMCI IK
518
(VERIFICATION SUCCESSFUL)

520 DISCARD THE OLD PLOAM IK/OMCI IK

522 VERIFY THE MESSAGE USING THE OLD PLOAM IK/OMCI IK (VERIFICATION UNSUCCESSFUL)

524 GENERATE A SPECIFIC MESSAGE USING THE TARGET IK

THE SPECIFIC MESSAGE
526

528 GENERATE A SPECIFIC MESSAGE USING THE TARGET IK

THE SPECIFIC MESSAGE
530

532 BEGIN TO USE THE NEW PLOAM IK/OMCI IK

THE CONFIGURATION FOR THE COUNTER VALUE OF THE DOWNLINK FRAME ON IK SWITCH
534

536 BEGIN TO USE THE NEW PLOAM IK/OMCI IK BASED ON THE CONFIGURATION

FIG. 5A

560

PLOAM IK

550

PLOAM MESSAGE 540

| 1..2 | ONI-ID |
| 3 | MESSAGE TYPE ID |
| 4 | SEQUENCE NUMBER |
| 5..40 | MESSAGE CONTENT |
| 41..48 | MIC |

DIRECTION CODE

ONI-ID

MESSAGE TYPE ID

SEQUENCE NUMBER

MESSAGE CONTENT

570

AES-CMAC-64 ENGINE

FIG. 5B

600

610

RECEIVE, FROM A SECOND APPARATUS, A KEY CONTROL MESSAGE DURING A PROCESS OF A KEY EXCHANGE, THE KEY CONTROL MESSAGE INDICATING A FIRST APPARATUS TO: GENERATE A KEY BY APPLYING A CIPHER ALGORITHM TO BE USED AND TRANSMIT THE KEY; OR CONFIRM A KEY CORRESPONDING TO A CURRENTLY USED CIPHER ALGORITHM

620

GENERATE A KEY REPORT BASED ON THE KEY CONTROL MESSAGE

630

TRANSMIT THE KEY REPORT TO THE SECOND APPARATUS

FIG. 6

700

710

TRANSMIT, TO A FIRST APPARATUS, A KEY CONTROL
MESSAGE DURING A PROCESS OF A KEY EXCHANGE, THE
KEY CONTROL MESSAGE INDICATING THE FIRST
APPARATUS TO: GENERATE A KEY BY APPLYING A CIPHER
ALGORITHM TO BE USED AND TRANSMIT THE KEY; OR
CONFIRM A KEY CORRESPONDING TO A CURRENTLY USED
CIPHER ALGORITHM

720

RECEIVE, FROM THE FIRST APPARATUS, A KEY REPORT
THAT IS GENERATED BY THE FIRST APPARATUS BASED ON
THE KEY CONTROL MESSAGE

FIG. 7

800

IN ACCORDANCE WITH A
DETERMINATION THAT A CIPHER
ALGORITHM CHANGE OCCURS IN THE FIRST
APPARATUS AND A SECOND APPARATUS IN
COMMUNICATION WITH THE FIRST
APPARATUS IN PON — 810

YES — 820

REGENERATE, AT LEAST ONE FIRST INTEGRITY KEY (IK) BASED ON A
NEW CIPHER ALGORITHM TO BE USED

— 820

START USING THE AT LEAST ONE FIRST IK IMMEDIATELY; OR START
USING THE AT LEAST ONE FIRST IK AFTER A CONDITION IS MET, THE
CONDITION COMPRISING AT LEAST ONE OF THE FOLLOWING:
COMPLETING, USING A TARGET IK, A SPECIFIC MESSAGE EXCHANGE
BETWEEN THE FIRST APPARATUS AND THE SECOND APPARATUS;
OR RECEIVING A SPECIFIC DOWNLINK FRAME BY THE FIRST
APPARATUS

FIG. 8

900

910

IN ACCORDANCE WITH A
DETERMINATION THAT A CIPHER ALGORITHM
CHANGE OCCURS IN THE SECOND APPARATUS AND A FIRST
APPARATUS IN COMMUNICATION WITH THE SECOND
APPARATUS IN PON

YES

920

REGENERATE AT LEAST ONE SECOND INTEGRITY KEY (IK) BASED ON
A NEW CIPHER ALGORITHM TO BE USED

920

START USING THE AT LEAST ONE SECOND IK IMMEDIATELY; OR
START USING THE AT LEAST ONE SECOND IK AFTER A CONDITION IS
MET, THE CONDITION COMPRISING AT LEAST ONE OF THE
FOLLOWING: COMPLETING, USING A TARGET IK, A SPECIFIC
MESSAGE EXCHANGE BETWEEN THE FIRST APPARATUS AND THE
SECOND APPARATUS; OR TRANSMITTING A SPECIFIC DOWNLINK
FRAME BY THE SECOND APPARATUS

FIG. 9

1000

1040

1010

COMMUNICATION
MODULE

PROCESSING
UNIT

1020
1022

MEMORY

RAM

1024

ROM

1030

FIG. 10

1030

1100

FIG. 11

Europäisches
Patentamt
European
Patent Office
Office européen
des brevets

# EUROPEAN SEARCH REPORT

**Application Number**

EP 25 21 1604

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YUANQIU LUO FUTUREWEI TECHNOLOGIES USA DAN GENG NOKIA SHANGHAI BELL CHINA: "G.9804.2 Amendment 2 Draft (for consent)", ITU-T DRAFT; STUDY PERIOD 2021-2024; STUDY GROUP 15, INTERNATIONAL TELECOMMUNICATION UNION, GENEVA ; CH , vol. 2/15 12 July 2024 (2024-07-12), pages 1-268, XP044397918, Retrieved from the Internet: URL:https://www-api.itu.int/ifa/t/2022/sg15/docs/240701/td/ties/plen/T22-SG15-240701-TD-PLEN-0370!R2!ZIP-E.zip G.9804.2Amd2-Draft-July11-2024.docx [retrieved on 2024-07-12] * Section 15.3. * * Section 15.3.1. * * Section 15.3.2. * * Section 15.3.3. * | 1-20 | INV. H04L9/40 H04L9/08 H04Q11/00 H04L9/32 |
| | ----- -/-- | | TECHNICAL FIELDS SEARCHED (IPC) H04L H04Q |

The present search report has been drawn up for all claims

| Place of search | Date of completion of the search | Examiner |
|---|---|---|
| Munich | 6 February 2026 | Caragata, Daniel |

EPO FORM 1503 03.82 (P04C01)

Europäisches Patentamt

European Patent Office

Office européen des brevets

# EUROPEAN SEARCH REPORT

**Application Number**

EP 25 21 1604

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | VLADIMIR OKSMAN MAXLINEAR USA:  "G.9804.2: Proposal to add a cipher selection procedure to G.9804.2;Dxx", ITU-T DRAFT; STUDY PERIOD 2021-2024; STUDY GROUP 15; SERIES DXX, INTERNATIONAL TELECOMMUNICATION UNION, GENEVA ; CH , vol. 2/15 27 July 2021 (2021-07-27), pages 1-7, XP044317123, Retrieved from the Internet: URL:https://www-api.itu.int/ifa/t/2017/sg1 5/exchange/wp1/q2/21-07-27_Zoom/210727_D11 _R1_G.9804.2_15min_Maxlinear_Cipher%20sele ction%20procedure.docx [retrieved on 2021-07-27] * Section 2.2. * * Section 15.4.X * ----- | 1-20 | |
| X | US 2023/231728 A1 (HU YONGFENG [CN] ET AL) 20 July 2023 (2023-07-20) * figure 2 * * figure 3 * * paragraph [0008] * * paragraph [0033] - paragraph [0035] * * paragraph [0040] - paragraph [0049] * * paragraph [0052] - paragraph [0061] * ----- | 1-20 | **TECHNICAL FIELDS SEARCHED      (IPC)** |
| X | CN 117 579 182 A (ZTE CORP) 20 February 2024 (2024-02-20) * figure 1 * * figure 2 * * paragraph [0022] * * paragraph [0031] - paragraph [0034] * * paragraph [0040] - paragraph [0042] * * paragraph [0060] - paragraph [0064] * * paragraph [0080] - paragraph [0083] * * paragraph [0089] - paragraph [0091] * * paragraph [0103] - paragraph [0104] * ----- | 1-20 | |

The present search report has been drawn up for all claims

| Place of search | Date of completion of the search | Examiner |
|---|---|---|
| Munich | 6 February 2026 | Caragata, Daniel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................

& : member of the same patent family, corresponding document

EPO FORM 1503 03.82 (P04C01)

page 2 of 2

## ANNEX TO THE EUROPEAN SEARCH REPORT
## ON EUROPEAN PATENT APPLICATION NO.

EP 25 21 1604

This annex lists the patent family members relating to the patent documents cited in the above-mentioned European search report.
The members are as contained in the European Patent Office EDP file on
The European Patent Office is in no way liable for these particulars which are merely given for the purpose of information.

06-02-2026

| Patent document cited in search report | | Publication date | Patent family member(s) | | Publication date |
|---|---|---|---|---|---|
| US 2023231728 | A1 | 20-07-2023 | CN | 114302264 A | 08-04-2022 |
| | | | US | 2023231728 A1 | 20-07-2023 |
| | | | WO | 2022062948 A1 | 31-03-2022 |
| CN 117579182 | A | 20-02-2024 | CN | 117579182 A | 20-02-2024 |
| | | | WO | 2025152864 A1 | 24-07-2025 |

EPO FORM P0459

For more details about this annex : see Official Journal of the European Patent Office, No. 12/82